# EUROPEAN PATENT SPECIFICATION

(11) **EP 0 782 119 B1**
(45) Date of publication and mention of the grant of the patent: **23.07.2003**
(21) Application number: 96117355.6
(22) Date of filing: 29.10.1996
(51) Int. Cl.: G08G 1/0969, G01C 21/20

(54) **Navigation system**
Navigationssystem
Système de navigation

(30) Priority: 30.10.1995 JP 28178095; 02.11.1995 JP 28611095; 30.11.1995 JP 33799295
(43) Date of publication of application: 02.07.1997
(73) Proprietor: AISIN AW CO., LTD., Anjo-shi Aichi 444-1192 (JP)
(72) Inventor: Ito, Yasunobu, Okazaki-shi, Aichi 486 (JP); Nimura, Mitsuhiro, Okazaki-shi, Aichi 444 (JP); Hayashida, Kihachi, Anjo-shi, Aichi 446 (JP); Hayashi, Seiji, Anjo-shi, Aichi 444-11 (JP); Hayashi, Chihiro, Kariya-shi, Aichi 448 (JP)
(74) Representative: VOSSIUS & PARTNER

(56) References cited:
- EP-A- 0 455 934
- EP-A- 0 556 400
- EP-A- 0 569 245
- EP-A- 0 632 252
- US-A- 4 937 572
- PROCEEDINGS OF THE VEHICLE NAVIGATION AND INFORMATION SYSTEMS CONFERENCE, DEARBORN, OCT. 20 - 23, 1991, vol. PART 1, 20 October 1991, INSTITUTE OF ELECTRICAL AND ELECTRONICS ENGINEERS, pages 279-281, XP000541293 SHELDRICK M ET AL: "J2095: A PROPOSED RECOMMENDED PRACTIVE FOR CDROM BOOTUP IN NAVIAGATION SYSTEMS"

## Description

The present invention relates to a navigation system which conducts route search and route guidance up to a predetermined destination.

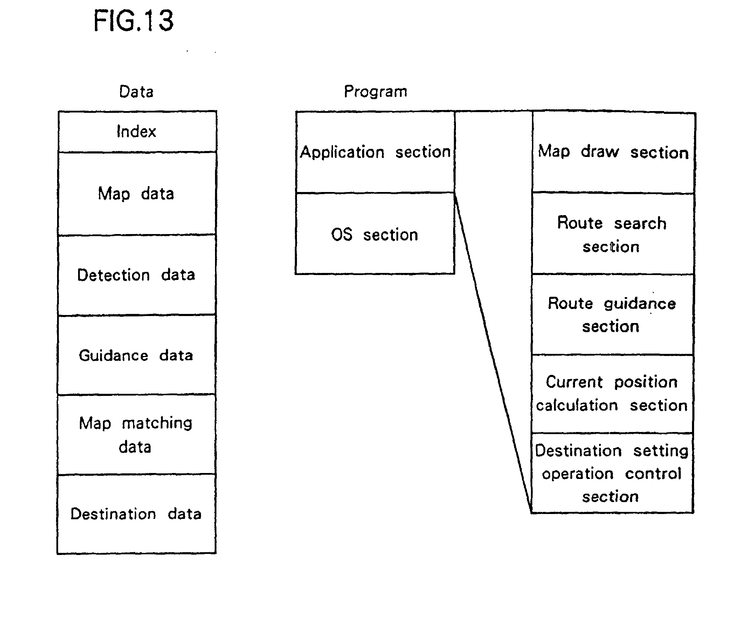

Fig.13 is a diagram for showing an example of the construction of program and data for navigation.

Various vehicle navigation systems which conduct route guidance up to a destination from a departure position or a current position through passing points with displays and voice have been proposed. The vehicle navigation system stores guidance data in its information storage unit to guide in map data and features of crossings and passing points with displays and voice as known in the art, searches a guidance route from the current position or departure position to the destination through passing points according to map data depending on a passing point or a destination (route search), and conducts route guidance. Thus, the vehicle navigation system comprises an input/output device for inputting and outputting information related to route guidance, a current position detection unit for detecting information relating to the current position of a vehicle, an information storage unit for storing navigation data necessary for calculation of a route and display/voice guidance data or the like necessary for route guidance, and a central processing unit for conducting route search processing, display guidance processing necessary for route guidance, and control of the overall system.

Generally, the information storage unit, as shown in Fig.13, comprises files of index, map data, search data, guidance data, map matching data, destination data and the like and is a king of database storing all data necessary for the navigation system. As an actual storage medium, the CD-ROM is often used for this purpose. The navigation program includes application section comprising map draw section (map draw program), route search section (route search program), route guidance section (route guidance program), current position calculation section (current position calculation program), and destination setting operation control section (destination setting operation control program), and OS section. The map draw section, the route search section, the route guidance section, the current position calculation section, and the destination setting operation control section perform their specified processing by using map data, search data, guidance data, map matching data and destination data respectively. Because the current position calculation section can calculate a current position using map data, by using map data commonly in the map draw section and the current position calculation section to omit map matching data, it is possible to reduce the amount of the overall data.

The present position calculation section detects a current position by comparing direction information and distance information obtained from signals of the relative direction sensor, the absolute direction sensor and the distance sensor with map data or map matching data. If a position input of the destination or the like or an instruction on route search occurs, the route search section searches an optimum route by using search data. If guidance is started, the route guidance section displays a map indicating a traveling direction relative to a current position, outputs a remaining distance up to a crossing, a feature point or a passing point, a traveling direction at a crossing, information of the feature point with guidance data according to a detected route, with displays and voice.

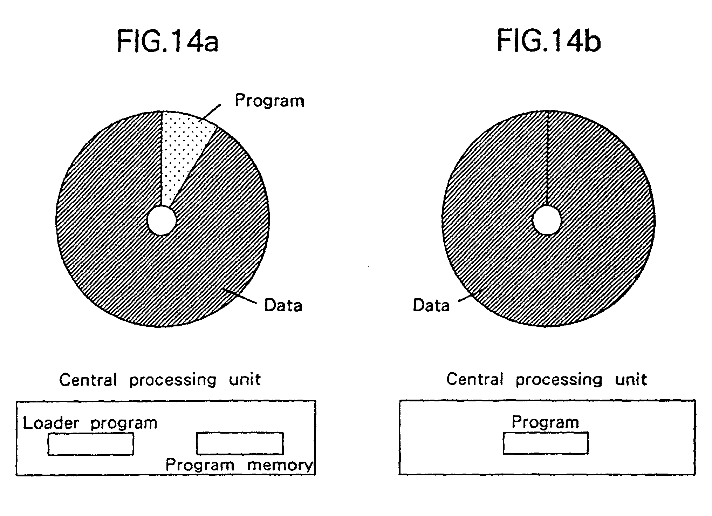

Fig.14 is a diagram for showing an example of correspondence between the storage information and the central processing unit (ECU) of a CD-ROM utilized in a conventional vehicle navigation system.

The conventional vehicle navigation system is largely classified to a type in which as for programs and data for route search and route guidance, for example as shown in Fig.14(b), only data is stored in a CD-ROM and applications and OS program are stored in a ROM of the central processing unit, and a type in which program and data are stored in a CD-ROM and a program memory area consisting of a RAM or a flush memory is prepared in the central processing unit to read a program each time when it is required.

The navigation map is classified to an nation-wide map which stores an all-over a country in a single storage medium, local version map storing each local area while the all-over the country is divided to several storage media, sightseeing map storing map in which additional information such as tour guide is added to a particular area, and other plural types. To provide these different maps with compatibility so as to be processed in the same apparatus, unification of data format has been usually performed. If maps produced to meet an particular program are classified, they can be largely classified to the following three types.
(1) The format for storing data is different in itself.
(2) Although the format for storing data is the same, map information such as its position coordinate, name and shape is different.
(3) The format for storing data, and data type and content such as position coordinate, name and shape are based on a uniform standard.

However, because as mentioned above, as data, for example, there are nation-wide version, local version and genre based versions (for sightseeing, leisure, and the like), and further some local versions have different division types, and the same program is provided with a plurality of CD-ROMs, if the CD-ROM is replaced, a destination and search condition (express road priority or the like) must be set and an instruction on route search must be input, so that these procedures provide users with an inconvenience. Even in the case of the same local versions, if they are developed separately, even if its coordinates are the same, information about its road number, crossing number and search condition become different. Additionally, because a guidance route is usually memorized with road numbers or crossing numbers, if the CD-ROM is replaced after the guidance road is memorized by conducting route search, route search becomes disabled under such a condition.

Further, as for the above classified three types of maps, in the case of (1), after a disk is replaced, it cannot be activated. In the case of (2), although the disk can be activated because its data format is the same, because the data content is different although the format is the same, it is impossible to guide about a route before the disk is replaced. In the case of (3), although it seems that route guidance before the disk is replaced is possible because the data style and content are based on the same standard, because the data content is different although the same standard is applied, it is impossible to provide with the same compatibility as before the replacement completely, for example, there may be produced such a problem that a road which exists in a local version does not exit in a nation-wide version. Thus, to receive an appropriate route guide, each time when the disk is replaced, it is necessary to conduct setting of a destination, setting of a search condition and route calculation processing again from the beginning, so that much inconvenience is produced to users.

In conventional navigation systems, by changing the CD-ROM to be set in the navigation system to various CD-ROMs depending on the field, purpose or genre thereof such as for sightseeing, golf, and the like, it is possible to achieve smoother and more comfortable moving of the vehicle. Thus, a plurality of the CD-ROMs are stored in a single case so that the CD-ROM from which information is read out corresponding to a command of a user can be changed manually.

However, in a conventional navigation system in which a CD-ROM from which information is read out is changed manually from a plurality of stored CD-ROMs, the CD-ROM is only changed and no attention is paid to the content of information of that CD-ROM. For example, suppose a navigation system in which five pieces of the CD-ROMs are stored. As for the changing operation with this navigation system, a CD-ROM in the first position of the changer is moved to an optical head and by the next command for change, the second CD-ROM is moved to the optical head. Like this, only mechanical changing operation is performed.

That is, according to the conventional navigation system, the CD-ROM is not automatically changed taking into account the information memorized in the CD-ROM. Thus, by a manual change command with switch input, a new CD-ROM is set on the optical head and information of this CD-ROM is read out and displayed on the display. Then, the user can judge whether or not the CD-ROM is a desirable one. Therefore, if the replaced CD-ROM is not a desirable one, the user has to instruct a CD-ROM change command to the navigation system again. This is a very worrisome procedure.

Like this, which CD-ROM will be selected by changing the CD-ROM cannot be known with certainty and a desired CD-ROM is not selected rapidly. Because a sightseeing CD-ROM, a leisure CD-ROM, a golf CD-ROM or detailed road map information storage CD-ROM of the same area are set in the changer, even if road map information recorded in the CD-ROM is the same, if the use purpose thereof is different, the user may worry about which CD-ROM should be selected and has to confirm the content of all the CD_ROMs thereby providing a very worrisome condition.

In addition, the replacement of the CD-ROM is accompanied with two large tag lags, a mechanical operation time of moving the CD-ROM to the optical head and information display time of reading information from the CD-ROM and displaying it on the display. Thus, in the navigation system in which a plurality of CD-ROMs are stored, selecting an appropriate CD-ROM depending on the current position and destination type of the vehicle is very difficult work for the user.

In a navigation system in which only a single CD-ROM can be set, the user has to replace the CD-ROM manually. Thus, if the vehicle moves in a geographical range across two pieces of local version, the user has to replace the CD-ROM during moving of the vehicle. Such replacement work of the CD-ROM is not easy during traveling of the vehicle. In addition, when the CD-ROM is replaced, on a basis of road information of the new CD-ROM replaced, navigation operation by route re-search and the like must be done. Thus, the navigation operation is stopped for a specific time just after the replacement, so that favorable traveling of the vehicle cannot be hoped. Such a system is described in EP-A-0 632 252.

Accordingly, the object of the present invention is to solve the above described problem and particularly enable route guidance without reinstructing route search even if a CD-ROM is replaced. The object is achieved by the features of the claims.
Fig.1 is a diagram for showing the entire circuit of a vehicle navigation system according to an embodiment of the present invention.
Fig.2 is a diagram for showing an example of construction of major data files stored in the information storage unit.
Fig.3 is a diagram for showing an example of construction of major data files stored in the information storage unit.
Fig.4 is a diagram for showing an example of construction of major data files stored in the information storage unit.
Fig.5 is a diagram for explaining a flow of the overall processing of the navigation system.
Fig.6 is a diagram for explaining the route search processing at the time of disk replacement.
Fig.7 is a diagram for explaining the construction of CD-ROM data.
Fig.8 is a diagram for explaining a relation between the construction of the CD-ROM and a loader program prepared in the central processing unit.
Fig.9 is a diagram for explaining a flow of the processing by the loader program.
Fig.10 is a diagram for explaining a relation between the construction of the CD-ROM and the loader program prepared in the central processing unit.
Fig.11 is a diagram for explaining a mutual utilization relation between the CD-ROM and the central processing unit.
Fig.12 is a diagram for showing examples of constructions of the combination of applications and OS to be stored in the CD-ROM.
Fig.13 is a diagram for showing an example of the construction of programs and data for navigation.
Fig.14 is a diagram for showing a correspondence between storage information in a CD-ROM applied in conventional vehicle navigation system and its central processing unit (ECU).
Fig.15 is a system construction diagram of a vehicle navigation system.
Fig.16 is a program loading flow chart (1) of the vehicle navigation system.
Fig. 17 is a program loading flow chart (2) of the vehicle navigation system.
Fig. 18 is a route search information holding flow chart (1) at the time of changeover from a nation-wide version CD-ROM to a local version CD-ROM during a traveling of a vehicle.
Fig.19 is route search information holding flow chart (2) at the time of automatic changeover between a nation-wide version CD-ROM and a local version CD-ROM during a traveling of a vehicle.
Fig.20 is a flow chart of changeover to a residential map.
Fig.21 is a residential map display flow chart.
Fig.22 is a diagram showing a display changeover screen (No.1) to a residential map.
Fig.23 is a diagram showing a display changeover screen (No.2) to a residential map.
Fig.24 is a diagram for showing the kinds of information recorded in the CD-ROM 37.
Fig.25 is a diagram for showing an example of the representation of road map data with the lowest reduced scale.
Fig.26 is a diagram for showing an example of representation of residential map data stored in the CD-ROM 37.
Fig.27 is a diagram for showing a part of data group memorized in the first RAM 43.
Fig.28 is a diagram for showing data group to be written into the second RAM 41.
Fig.29 is a diagram for showing a main flow chart of the entire processing of the navigation system.
Fig.30 is a diagram for showing a first example of CD-ROM processing subroutine.
Fig.31 is a diagram for showing a second example of CD-ROM processing subroutine.
Fig.32 is a diagram for showing a second example of CD-ROM processing subroutine.
Fig.33 is a diagram for showing a third of CD-ROM processing subroutine.
Fig.34 is a diagram for showing a fourth of CD-ROM processing subroutine.

Hereinafter, embodiments of the present invention will be described with reference to the accompanying drawings.

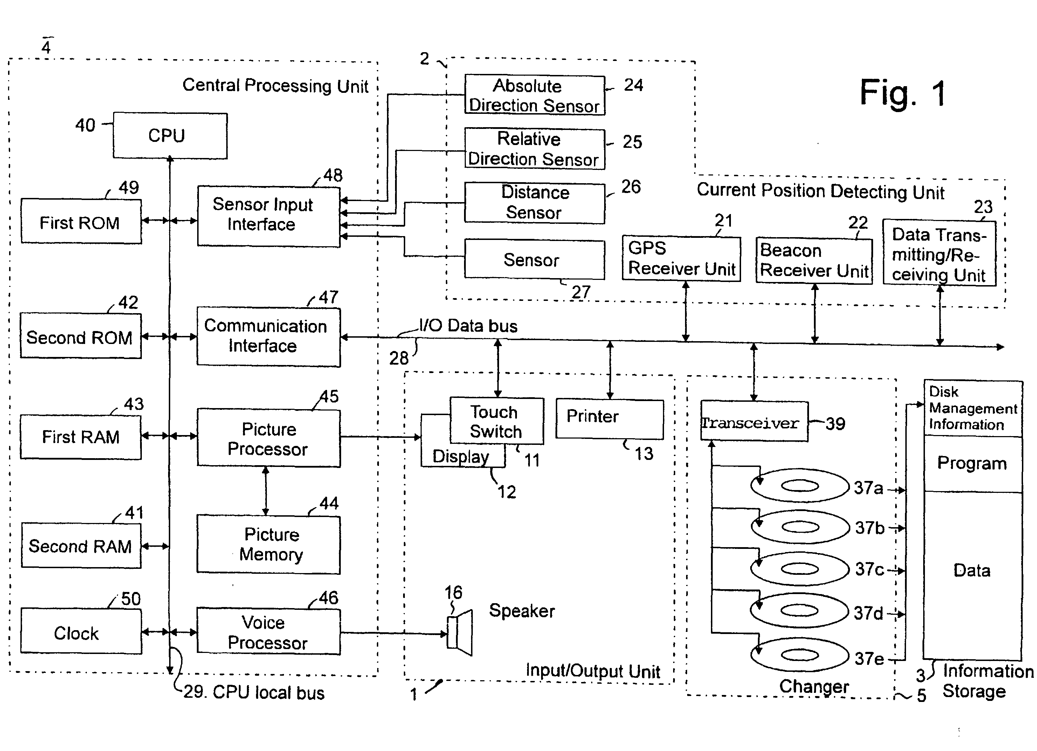

Fig.1 is a diagram for showing an embodiment of a navigation system according to the present invention. As shown in Fig.1, the navigation system according to the present invention comprises an input/output unit 1 for inputting and outputting information concerning route guidance, a current position detecting unit 2 for detecting information concerning the current position of a vehicle, an information storage unit 3 for storing navigation data necessary for calculation of a route, visual/audio guidance data necessary for guidance of a route and programs (application and/or OS), and a central processing unit 4 for controlling the entire system. First, the respective components will be described.

The input/output unit 1 has a function for instructing the central processing unit 4 to perform navigation processing at a driver's disposal such that the guidance information can be output audibly and/or through a display screen when the driver requests and outputting a processed data through a printer. As a means for achieving that function, the input section includes a touch switch 11 or operation switches for entering a destination by telephone numbers or coordinates on a map and requesting for route guidance. Of course, such an input device as a remote controller may be used instead. Its output section includes a display 12 for automatically displaying route guidance on the screen in response with a driver's request, a printer 13 for printing data processed in the central processing unit 4 or data stored in the information storage unit 3, and speakers for outputting the route guidance audibly.

Here, it is permissible to add a voice recognition device which enables voice input or a recording card reading device for reading data written in an IC card or a magnetic card. Or it is permissible to add a data communication device for performing data exchange with an information source such as an information center which stores data necessary for navigation and supplies such data through a communication line in response to a driver's request and an electronic booklet in which data inherent of the driver such as map data and destination data is stored.

A display 12 is constituted of a color CRT or a color liquid crystal display and outputs all screens necessary for navigation such as a route setting screen based on map data and guidance data processed by the central processing unit 4, an interval map screen and a crossing map screen in colors, and further displays buttons for setting route guidance in the screen and for switching a guidance or screen just providing route guidance.

This display 12 is mounted in an instrument panel in the vicinity of a driver's seat. The driver recognizes the current location of his vehicle by watching the interval map and obtains information about a route which he will follow. The display 12 is provided with touch switches 11 corresponding to the indications of the function buttons. Touching the touch switch 11 executes the above-mentioned operation based on a signal input correspondingly. Although the input signal generation means comprising this button and the touch switches constitutes the input section, detailed description thereof is omitted here.

The current position detecting unit 2 comprises a GPS receiver unit 21 utilizing global positioning system (GPS), a beacon receiver unit 22, a data sending/receiving unit 23 for receiving a GPS compensation signal using for example, cellular phone or FM multiple signal, an absolute direction sensor 24 constituted of for example, a geomagnetic sensor, a relative direction sensor 25 constituted of a wheel sensor, a steering sensor, a gyroscope or the like, and a distance sensor 26 for detecting a traveling distance according to a number of the revolutions of a wheel.

The information storage unit 3 stores a program and data for navigation. The program comprises a map draw section, route search section, route guidance section, a current position calculation section, a destination setting operation control section and the like, and is constituted of applications for signal output processing for navigation, operating system and the like. A program for processing for route search and the like, programs for performing display output control necessary for route guidance and audio output control necessary for audio guidance, data necessary therefor and display information data necessary for route guidance and map display are stored therein. Data comprises files of map data, search data, guidance data, map matching data, destination data and the like and all data necessary for the navigation system is stored.

The central processing unit 4 comprises a CPU 40 for executing various arithmetic operations. The CPU 40 is connected via a CPU local bus 29 to a flush memory which is a second RAM 41 for reading a program from a CD-ROM in the information storage unit 3 and storing it, a ROM 42 storing a program for storing a program in the flush memory 41, a RAM 43 for temporarily storing route guidance information such as a location coordinate of a set destination, a road name code No. and the like and data under arithmetic operation, picture memory 44 storing picture data for use in screen indication in the display, a picture processor 45 for fetching out a picture data from the picture memory 44 on a basis of a display output control signal from the CPU 40, processing the data and outputting it to the display, a voice processor 46-for synthesizing voice, phrase, a complete sentence, sound and the like read out from the information storage unit 3 on a basis of an audio output control signal from the CPU so as to convert them into analog signal and output to a speaker 16, a communication interface 47 for handling input and output data in communication, a sensor input interface 48 for fetching in a sensor signal from the current position detecting unit 2, and a clock 50 for entering date and time into internal diagnostic information. Here, this system is constructed so that route guidance is carried out in the form of screen display and voice output and that the presence or absence of voice output can be selected by a driver.

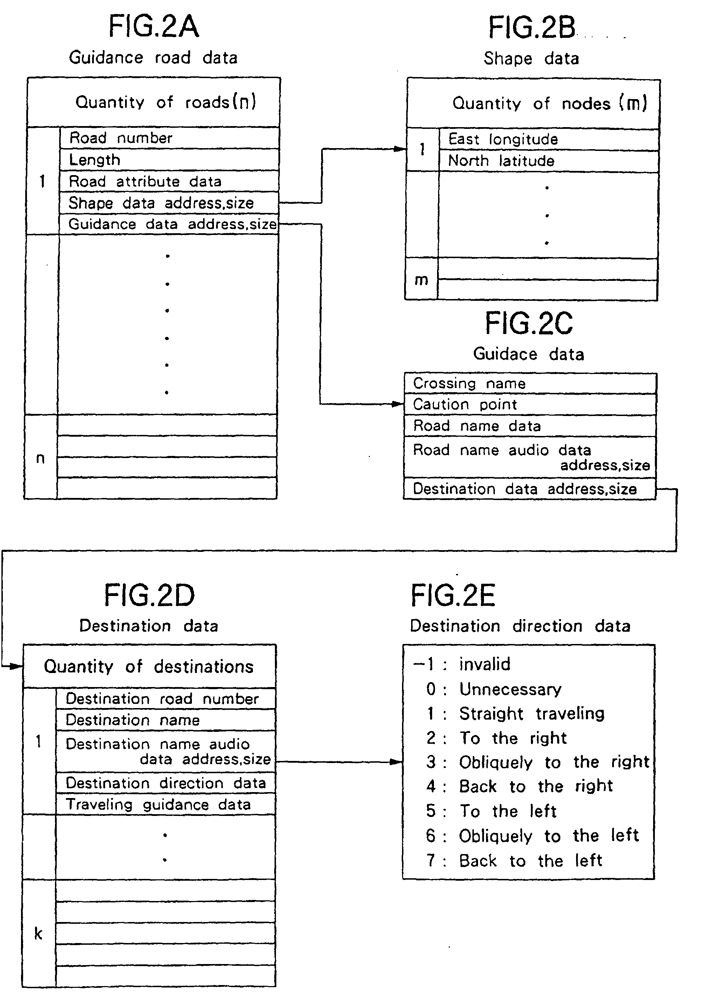

Figs.2-4 are diagrams for showing an example of composition of major data files stored in the information storage unit 3. Fig.2 (A) shows a guidance road data file obtained by route search and stored as data necessary for route guidance. The guidance road data file includes road numbers, lengths, road attribute data and shape data address and size, of each of the quantity of roads n, and guidance data address and size.

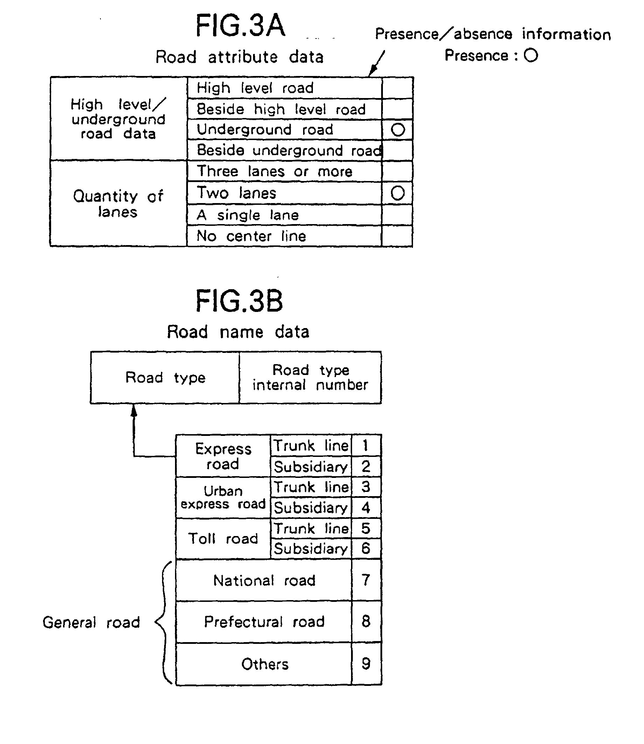

The road number is specified on each road between junctions for-each direction (outward way, inward way). The road attribute data as shown in Fig. 3(A) is road guidance subsidiary information data, which indicates information about high level and underground roads as to whether a road is high level, beside a high level road, an underground road, or beside an underground road, and information about the number of lanes. When the shape data is divided by a plurality of nodes of each road as shown in Fig.2(B), the respective node number m has coordinate data about its east longitude and north latitude. The guidance data comprises crossing (or junction) names, caution point data, road name data, road name audio data address and size and destination data address and size, as shown in Fig.2(c).

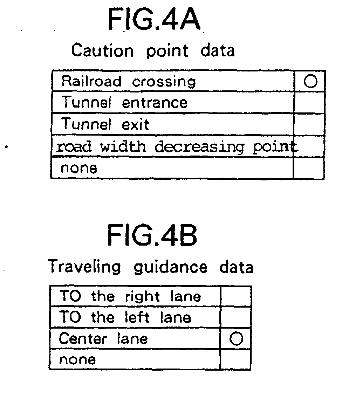

Of the guidance data, the caution point data is data providing information as to whether or not the caution point is a railroad crossing, tunnel entrance, tunnel exit, or road width decreasing point and data for providing a caution for a driver at a railroad crossing, a tunnel or the like except a junction, as shown in Fig.4(A). The road name data is, as shown in Fig.3(B), data providing information about road type such as express road, urban highway, toll road, general road (national road, prefectural road, others) and data showing a trunk line or subsidiary road of express road, urban highway and toll road, comprising road type data and road type internal number which is individual number data in each road type. The destination data, as shown in Fig.2(D), comprises destination road number, destination name, and destination name audio data address and size, destination direction data and traveling guidance data.

Of the destination data, the destination direction data, as shown in Fig.2(E), is data indicating information about, invalid (no destination direction data is used), unnecessary (not guided), straight traveling, to the right, obliquely to the right, back to the right, to the left, obliquely to the left and back to the left. The traveling guidance data, as shown in Fig.4(B), stores data as to which lane a vehicle should travel if there are a plurality of lanes and is data indicating information as to right lane, left lane, center lane or none.

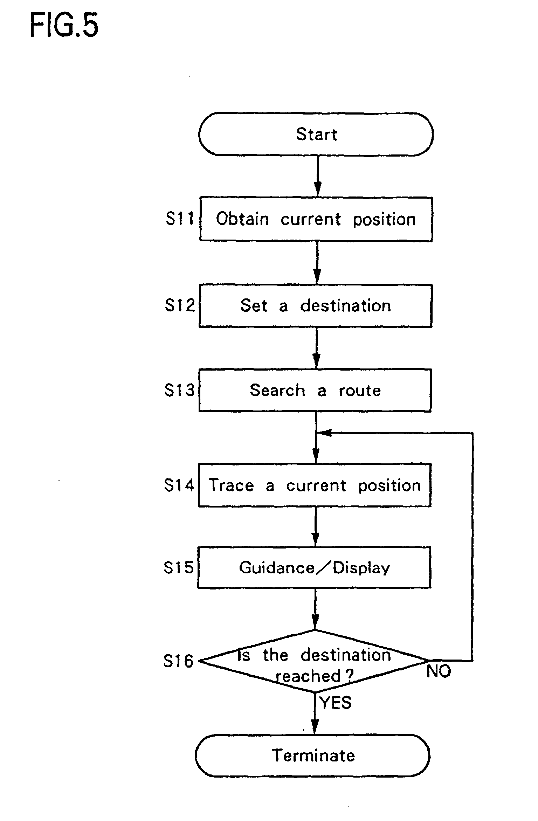

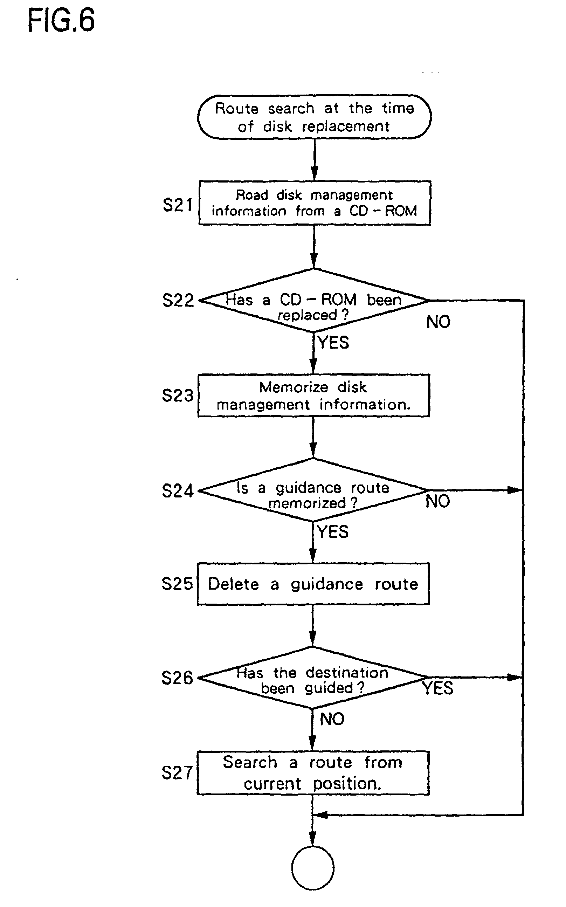

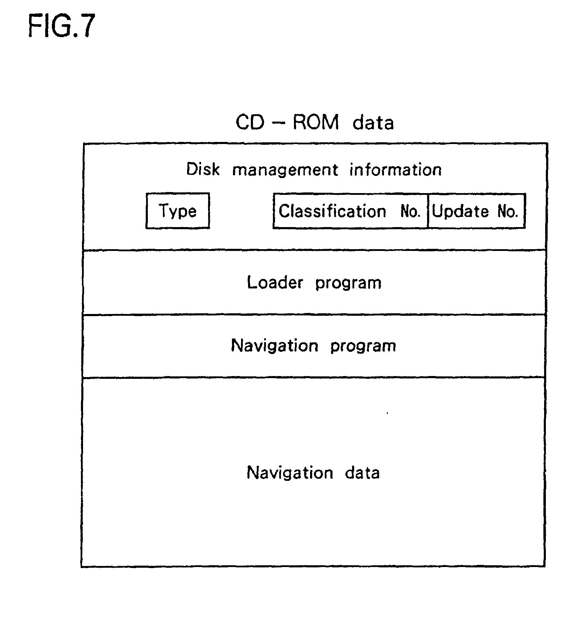

Fig.5 is a diagram for explaining the flow of the overall processing of the navigation system. Fig.6 is a diagram for explaining route search processing when a disk is replaced. Fig.7 is a diagram for explaining the construction of the CD-ROM.

The overall processing of the above mentioned navigation system is executed according to the steps shown in Fig.5. First, a current position (departure position) necessary for route search is obtained by the current position detecting unit (step S11). Next, a destination is set according to a destination input from the input device through the destination setting screen (step S12), and route search is executed and then a detected guidance route is memorized in a route storage means (step S13). If a guidance start instruction is input, route guidance control means starts route guidance, detects a current position of a vehicle on a basis of the current position detection unit and traces the current position (step S14). On a basis of a guidance route memorized in the route storage means, guidance information is output to an output device in the form of voice and/or display to perform route guidance (step S15). Then, by comparing the current position with a destination, an arrival to the destination is judged (step S16), and if it is judged that the destination has been reached, the route guidance is terminated. According to the present invention, to cope with a replacement of a CD-ROM (information storage unit), route search processing at the time of disk replacement as shown in Fig.6 is executed by periodic interruption.

In the route search processing at the time of disk replacement, first, disk management information is read from a CD-ROM (step S21) and whether or not a CD-ROM has been replaced by disk management information read this time and previously memorized disk management information (step S22). If it is judged that the CD-ROM has been replaced, the read disk management information is memorized and updated (step S23). Then, whether or not a guidance route is memorized is investigated (step S24) and if a guidance route is memorized, that guidance route is deleted (step S25). Whether or not a destination has been already guided is investigated (step S26) and if the destination has not been guided, route search from the current position is executed (step S27). In each of the judgment processing, if it is judged that the CD-ROM has been not replaced, if it is judged that any guidance route has not been memorized, or if it is judged that the destination has been guided, this interruption processing is terminated.

Although a memory medium for storing data may be any type such as disk type or cassette type, generally disk type such as CD-ROM and DVD is favorable and currently used. As a unit for reading data from such a disk type memory medium, a single type reading unit in which a single disk is stored and data is read and a changer type reading unit in which a plurality of disks are stored, disks are replaced in response to a request and data is read, are available.

Particularly, in the changer type reading unit, by storing a plurality of kind data in the unit, such as nation-wide version, local version and sightseeing version, users can replace the disk easily depending on the purpose. For example, in long-distance traveling, a plurality of disks are sometimes needed to reach a destination from a current position. In this case, it is preferable to first receive route guidance by calculating a route by a nation-wide version disk and then replace it with a local version disk or a sightseeing version disk having more information when a vehicle approaches a destination.

Then, whether or not a disk has been replaced is judged, and if it is judged that the disk has been replaced, the processings of steps S21, S22, S23 are executed. Meanwhile, generally when a disk is replaced, all information in the RAM is deleted, however, according to the present invention, the RAM in the unit is constructed such that the related route guidance information cannot be deleted. This construction enables the previous route information to be used even if disk replacement is conducted.

The central processing unit reads disk information from the disk when it recognizes that the disk has been replaced, and compares and judges its format, sentence meaning, version and the like with those of a previous disk. If the format is recognized to be different, it judges that format type and judges whether or not this unit can correspond to a program of that type. If it is judged that it can correspond, navigation with a corresponding program can be started. If it is not possible to correspond, the unit notifies a user of it that it is not possible to correspond. After the program is started, on a route before the disk replacement, a route up to a destination is arithmetically operated according to the position coordinates and route search condition of the destination and passed positions. Search of detection can be carried out manually or automatically. Because the disk can be replaced with route information stored, it is possible to omit setting procedure for calculation of destination, route and the like when the disk is replaced, so that complicated procedures at the time of disk replacement can be reduced. Additionally, by providing a means for judging the situation of route guidance before the disk replacement, if it is judged that the vehicle has already reached a destination, a passed position or the like, only the interval which has not been guided can be searched and guided, so that unnecessary route search processing can be eliminated and search time can be reduced.

Meanwhile, upon execution of a program, it is permissible to store a plurality of programs in the unit or obtain a plurality of programs from a CD-ROM. The construction of storing a plurality of programs in the unit eliminates the necessity of storing those programs in an external memory means (e.g., a disk) and thereby increases the capacity of storing various data necessary for route guidance. With this construction, if the disk is replaced, the previously activated program is compared and judged first. If it is different from the format of that appropriate disk, whether or not that disk can be activated is judged as to other programs stored in the unit step by step. As a result, if a program which can start that disk is found, it is possible to start the disk with that program. If a program is wanted from outside, by using a rewritable ROM, for example, EPROM, EEPROM, flush memory or the like as a memory for storing programs of the unit, the content of that replaced disk is compared and judged with the previously activated program. If it is judged that it has been replaced with a disk having a different format, by rewriting the program, it is possible to start that disk.

The above described processing refers to a type in which only data is stored in a CD-ROM and application and OS programs are stored in a ROM of the central processing unit as shown in Fig.14(b) and a type in which a program and data are stored in a CD-ROM and programs are written in a program memory area of a RAM or a flush memory of the central processing unit as shown in Fig.14(a) while the same version program is used. However, in a latter type whose version has been updated, after the processing of step S23, it is needless to say that the processing of program reading and writing into program memory are necessary. Although the guidance route is usually memorized with a road number, a crossing number or the like as described previously, position information about a destination, a roundabout point and the like is memorized in coordinate values, therefore the information memorized in coordinate value can be left as it is and used without being deleted in step S25. The same is applied to information which can be used as it is, like search condition such as express road priority, toll road priority, and the like.

The CD-ROM data comprises, as shown in Fig.7 for example, disk management information, loader programs, and program for navigation and data for navigation. The disk management information includes CD-ROM type (for navigation, music, video, and the like), classification No. of local version, nation-wide version, sightseeing version, leisure version, genre, and the like, update No. and the like. In the case for navigation, if it is local version, by providing an appropriate area with coordinates, it is possible to identify an area on a basis of the coordinates. As explained previously, the navigation program comprises a map draw section, route search section, route guidance section, a current position calculation section, a destination setting operation control section and the like, and is constituted of application section processing navigation signal output and OS section. Data includes map data, search data, guidance data, map matching data, destination data and the like.

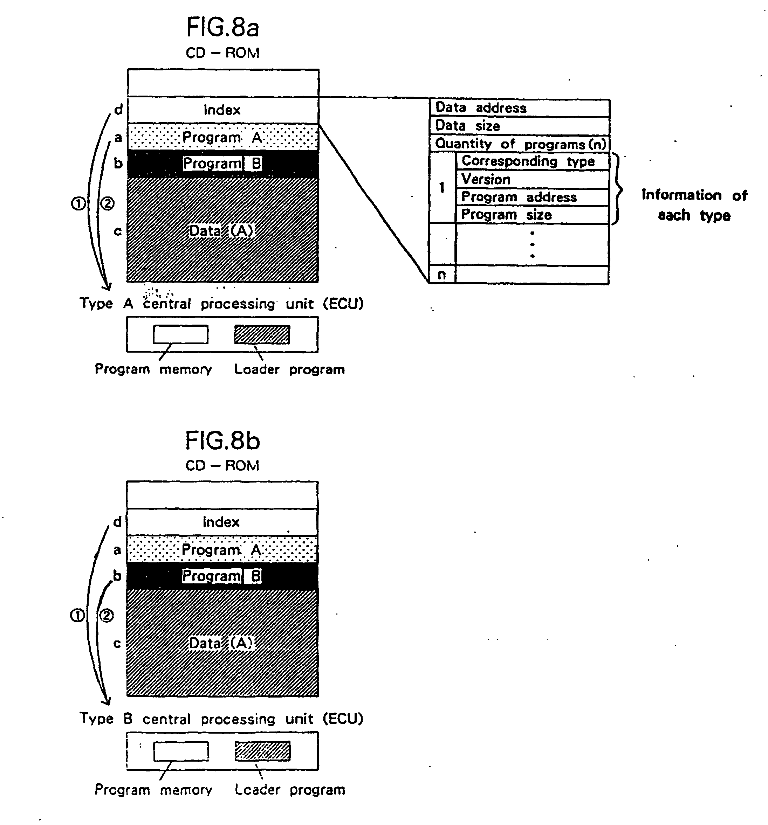

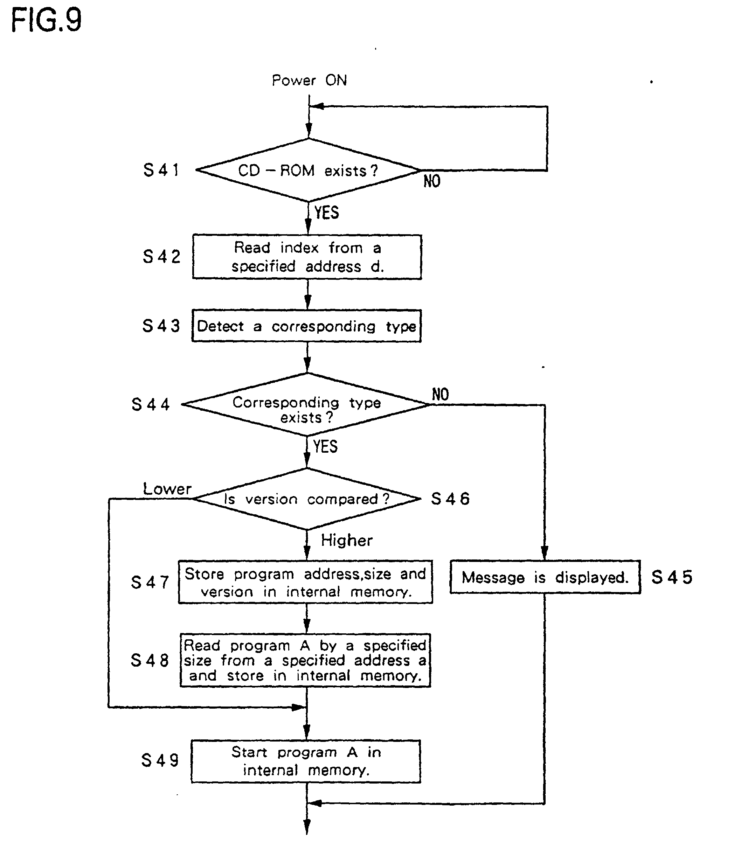

Fig.8 is a diagram for explaining a relation between the construction of the CD-ROM and a loader program prepared in the central processing unit. Fig.9 is a diagram for explaining a flow of processing by the loader program.

In the CD-ROM (information storage unit) shown in Fig.8, its address space is allocated such that index is memorized from address d, program A is memorized from address a, program B is memorized from address b and data (A) is memorized from address c. The index information comprises data address, data size, program number (n) and program address information of each type. The program address information of each type includes corresponding type (e.g., A, B, ···), version, program address, and program size. Namely, this index corresponds to disk management information explained in Fig.7 and the corresponding type corresponds to the classification number. The program A is a program of the corresponding type A which is read into the central processing unit and activated therein. The program B is a program of the corresponding type B which is read into the central processing unit and activated therein. Both the programs utilize data (A) of the type A. Namely, for data (A), the program B which can be activated in the type B such that navigation program using data (A) produced for the type A can be serviced for the type (B). Thus, if corresponding to this CD-ROM, in the type A, the loader program in the central processing unit (ECU) is equipped with the function to read the index and recognize the address and size of the program A, if the index is read as shown in Fig.8(a), next the program A is read and stored in the program memory (second RAM 41 in Fig.1), so that route search and route guidance can be done with data (A) of the type A. Likewise, in the type B, if the loader program in the central processing unit is equipped with the function to read the index and recognize the address and size of the program B, if the index is read as shown in Fig.8(b), next the program B is read and stored in the program memory (first RAM 42 in Fig.1), so that route search and route guidance can be performed with the data (A) of the type A by the activation of the program B of the type B. Namely, the CD-ROM can be commonly used. Thus, by using a CD-ROM constituted of the program A, the program B and data (B) of the type B in the central processing unit of the type A, it is possible to perform route search and route guidance with data (B) of the type B by the activation of the program A of the type A.

As for the above described processing with the loader program, as shown in Fig.9, first, setting of a CD-ROM is waited for (step S41) and if the CD-ROM is set, the index is read from its specified address d (step S42). Then, a corresponding type is detected according to program address information of each type (step S43). Then, whether or not there is a corresponding type (e.g., A) is judged (step S44) and because this CD-ROM cannot be used if there is no corresponding type, a corresponding appropriate message is output and displayed (step S45). If there is a corresponding type, program version is compared with that in the program memory (step S46). Then, if the version is the same or of lower level, the program A in the program memory is started immediately (step S49). If the version is of higher level, the address, size and version of the program are stored in the program memory (step S47). The program A is read by a specified size from a specified address a and stored in the program memory (step S48). After that, the program A in the program memory is started (step S49). Like this, if the version is the same or of lower level, processing wasteful in this case of step S47 and step S48 can be omitted so that quick start of the program can be realized.

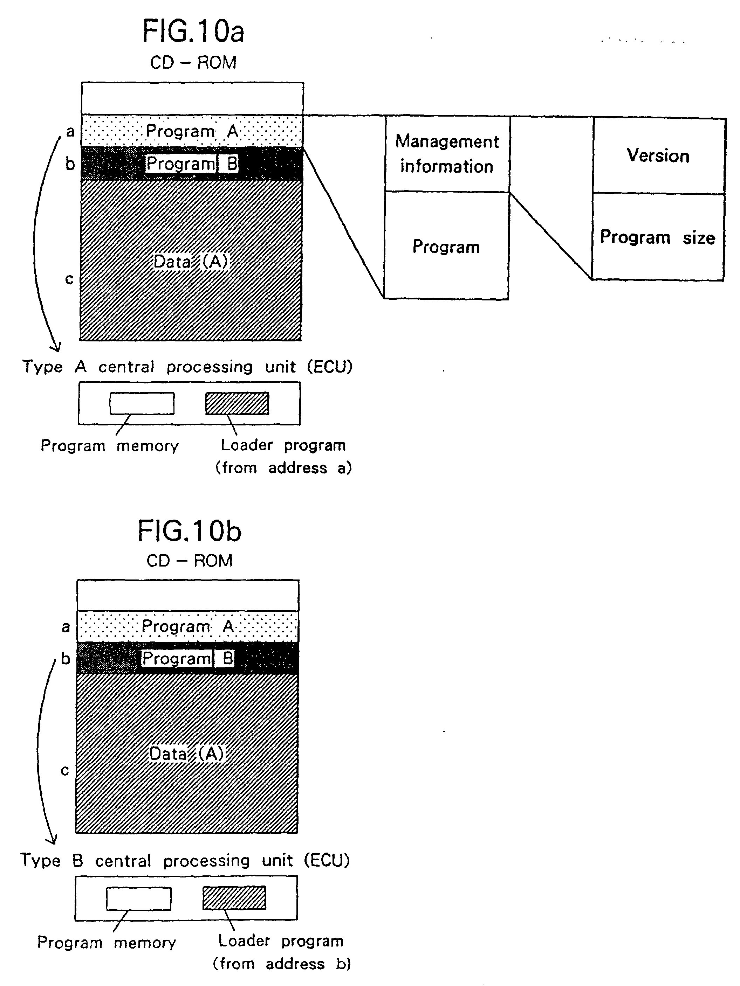

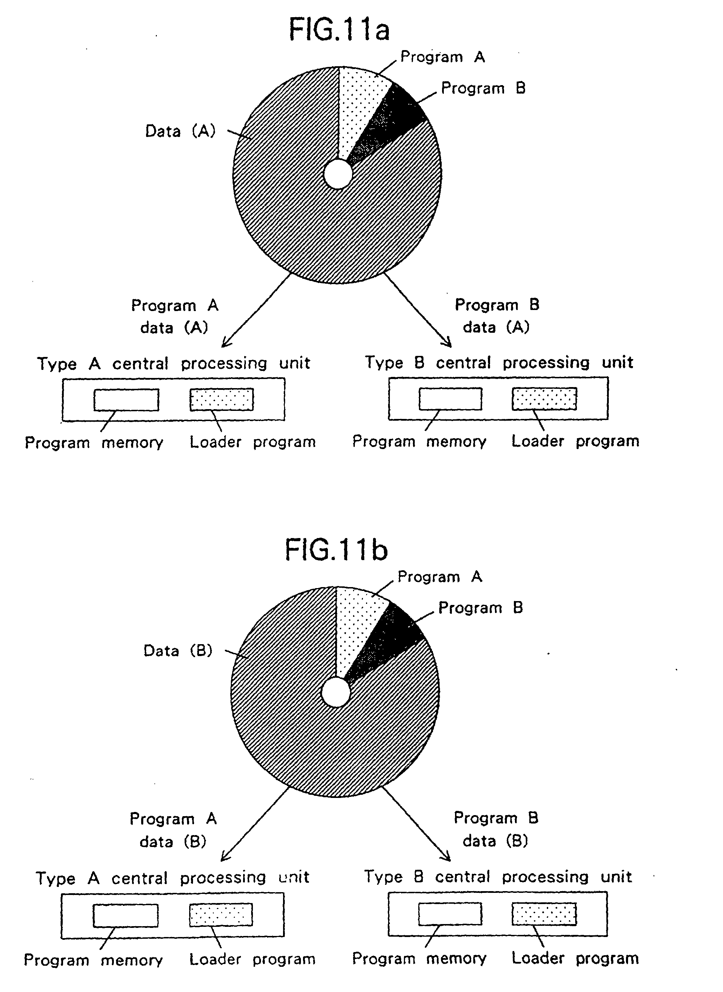

Fig.10 is a diagram for explaining a relation between the construction of a CD-ROM and the loader program prepared in the central processing unit. Fig.11 is a diagram for explaining a mutual utilization relation between a CD-ROM and the central processing unit.

Fig.10 is an example of construction of a CD-ROM in which no index is memorized. Both the program A and the program B respectively have version and program size as management information. Corresponding to such a CD-ROM, program reading addresses are set in the loader program of the central processing unit. For example, in the loader program of the central processing unit of the type A, the program A is read from the address a as shown in Fig.10(a). First, management information is read and stored in the program memory. Subsequently, according to the program size of the management information, a program is read and stored in the program memory. By activating the program A, navigation using data (A) of the type A is conducted. On the other hand, the loader program of the central processing unit of the type B is for reading the program B from the address b as shown in Fig.10(b). First, management information is read and stored in the program memory. Subsequently, according to the program size of the management information, the program is read in and stored in the program memory. By activating this program B, navigation using data (A) of the type A is conducted. Even in this construction, by comparing a version in the management information with that in the program memory, whether or not the program should be updated may be judged.

Fig.11 shows a mutual utilization relation between the CD-ROM and the central processing unit of the type A and the type B respectively. Fig.11(a) shows a case in which data (A) of the type A is memorized and a CD-ROM storing the program A for use in the central processing unit of the type A and the program B for use in the central processing unit of the type B is used. Fig.11(b) shows a case in which data (B) of the type B is memorized and a CD-ROM storing the program A for use in the central processing unit of the type A and the program B for use in the central processing unit of the type B is used. In the central processing unit, a loader program and a program memory which read a program of its own type from the CD-ROM are prepared. In the CD-ROM, the programs A, B of the types A, B respectively, comprising application section including a map draw section, route search section, route guidance section, a current position calculation section, and a destination setting operation control section and OS section, and all data necessary for the navigation system, comprising files of map data, search data, guidance data, map matching data, destination data and the like, commonly used by each of the programs are stored. As a result, it is possible to use the CD-ROM of any type so that the general purpose utilization and flexibility of the navigation system can be increased.

Meanwhile, the present invention is not restricted to the above described embodiments and can be modified in various forms. For example, although in the above embodiment, route search processing at the time of disk replacement is periodically conducted by interruption, it is permissible to conduct route search processing at the time of disk replacement by using a disk mounting/removal signal as a trigger. Although the CD-ROM is used as information storage unit, it is permissible to use a memory card, an optical card or other memory medium if it is a small size information storage medium which can be mounted and removed. Although in the present embodiment, programs are prepared corresponding to each type by combining the application section and the OS section in a set, it is permissible to provide a plurality of programs in which a plurality of OS sections highly dependent on hardware are contained and the application section is formed for common use.

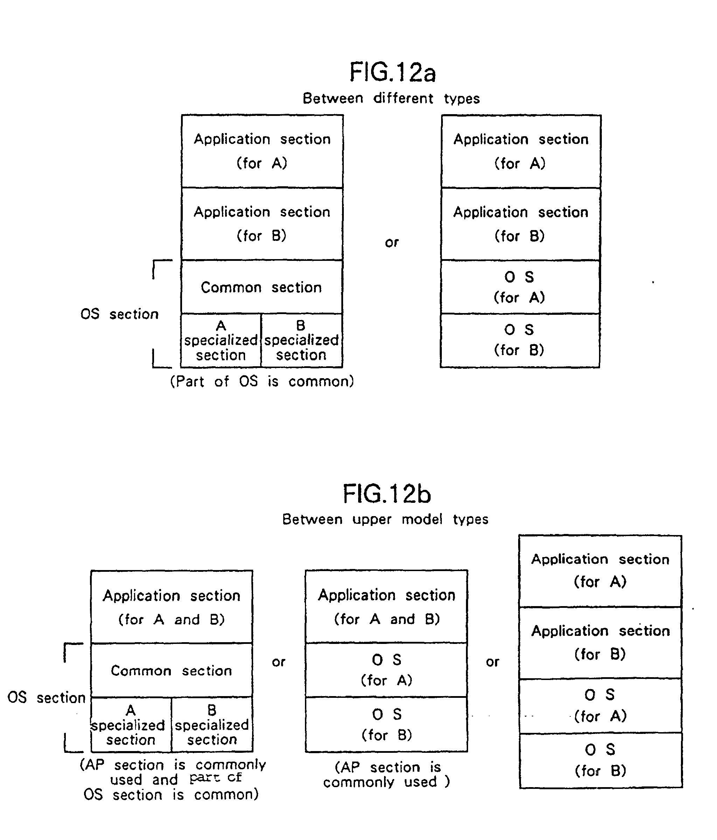

Further, as an example of construction of the application and OS to be stored in the CD-ROM, if B type model is different from A type model, as shown in Fig.12(a) it is permissible to not only divide the OS section as to correspond to the type A and the type B, but also divide the OS section so as to have a common section for the type A and the type B and a specialized section for the type A and type B separately. In this case, comparing to a case in which an individual OS is provided, it is possible to reduce the memory capacity. If B type model is an upper type model (having more navigation functions) in comparison with A type model, to ensure a correspondence to model A and model B of a certain type as shown in Fig.12(b), it is permissible not only to divide the application section and the OS section respectively to sections for the type A and the type B, but also to provide a construction wherein the application section is commonly used between the type A and the type B. Still further, it is permissible to construct the OS section so as to be divided to a common section between the types A and B and their own specialized section. That is, it is needless to say that this combination may be changed appropriately as required.

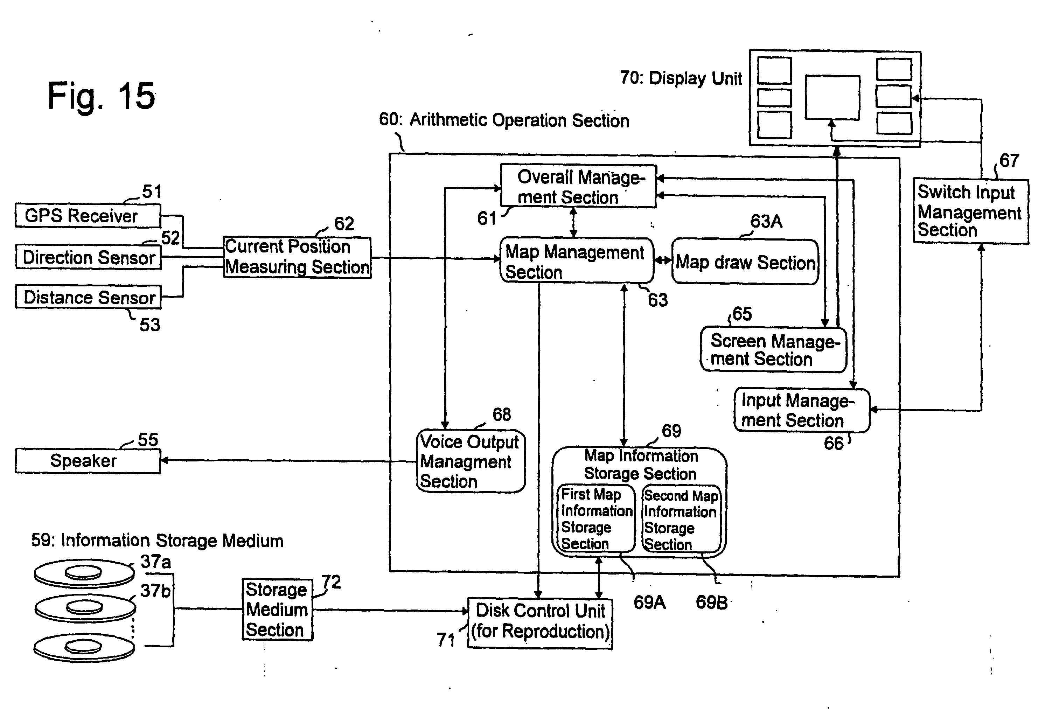

Next, art relating to the invention will be described with reference to the accompanying drawings. A navigation system will be explained in detail with reference to Fig.15 to Fig.23.

Fig.15 is a diagram for showing a system construction of a navigation system.

As shown in Fig.15, this navigation system includes an arithmetic operation control section. This arithmetic operation control section 60 is connected to a display which functions as a touch panel, a display unit 70 including operation switches provided around this display and a switch control section 67 for controlling input from the touch panel of the display unit 70 and the switches. The arithmetic operation control section 60 corresponds to the previously mentioned central processing unit 4 and the display unit 70 corresponds to the display 12.

As for the switch, switches for specifying the menu screen of the navigation system, switches for adjustment of air conditioning, switches for operating audio equipment and other switches are provided. Pressing one of these switches indicates a corresponding menu screen on the display. The screen displayed on the touch panel has a hierarchical structure so that a menu screen exists on its highest level.

On the menu screen of the navigation system, for example, specification keys for specifying destination setting, place name detection and the like are displayed. If a destination setting key is specified, a specification key for specifying a skiing ground, a golf course or the like is displayed as a lower level screen and by specifying each specification key, up to the lowest level screen is displayed gradually.

The arithmetic operation control section 60 is connected to a disk control unit 71 for reading an external information storage medium 59 selected by a current position measuring section 62 and a storage medium selecting unit 72, and a disk control unit 71. The current position measuring section 62 fetches data from GPS (global positioning system) receiver 51, a direction sensor 52 and a distance sensor 53 to measure the current position of a vehicle. The current position measuring section 62 corresponds to the previously mentioned current position detecting unit 2. The GPS receiver 51, the direction sensor 52, and the distance sensor 53 correspond to the aforementioned GPS receiver unit 21, the absolute direction sensor 24, the relative direction sensor 25 and the distance sensor 26, respectively. A GPS receiver 51 is a unit for receiving signals from an artificial satellite and can obtain various information such as signal transmission time, position information of a receiver, receiver moving speed and receiver moving direction.

Additionally, although not shown, it is provided with a beacon receiver which is an equipment for receiving a signal transmitted from a transmitter installed at a particular point and can obtain particularly VICS information, namely information about vehicle traveling such as traffic jamming information, current position information and parking information.

A direction sensor 52 has an absolute direction sensor and a relative direction sensor. The absolute direction sensor is a geomagnetic sensor for detecting which direction a vehicle is positioned by detecting N direction based on a magnet and may be a means for detecting the absolute direction.

The relative direction sensor is a sensor for detecting whether or not the vehicle has turned at a crossing and may be an optical rotation sensor installed on the rotation section of a steering wheel, a revolution type resistance volume or an angle sensor installed on wheels. Or it is permissible to use a gyro sensor for detecting a change in angle from angular velocity. That is, any means capable of detecting a relative changed angle with respect to a standard angle (absolute direction) may achieve this purpose.

A distance sensor 53 may be a sensor which detects the revolution of the wheel and counts it or a sensor which detects the acceleration and integrates it twice. That is, it may be any means capable of measuring a traveling distance of a vehicle. Additionally, for guidance with voice from the navigation system, the vehicle is equipped with a speaker 55.

An external information storage medium 59 comprises map data, crossing data, node data, road data, photo data, registration point data, guidance point data, destination data, telephone number data, address data and the like necessary for guiding a route, and is a data base in which all data necessary for the navigation system is stored. The external information storage medium 59 corresponds to the aforementioned information storage section 3, and map data, crossing data, node data, road data, photo data, registration point data, guidance point data, destination data, telephone number data, address data and the like of the external information storage medium 59 correspond to data of the information storage section 3.

Further, the external information storage medium 59 has every kind, for example, nation-wide version CD-ROM37a storing nation wide map data, local version CD-ROM37b storing more detailed map data than the nation-wide version, including only a part thereof, sightseeing CD-ROM storing sightseeing information and the like are mounted on a vehicle.

The disk control unit 71 is connected to the storage medium selecting unit 72 and instructs the storage medium selecting unit 72 about the external information storage medium 59 which corresponds to the current position of a vehicle or an input from outside for an instructed external information recording medium 59 to be selected by the storage medium selecting unit 72. Then, map information peripheral of the current position and information for guiding a route are read from the selected external information storage medium 59.

The arithmetic operation control section 60 comprises a CPU (central processing unit), ROM (read only memory), RAM (random access memory) and the like and the CPU executes a program stored in the ROM by using the RAM as a working area to achieve the above mentioned respective compositions.

Namely, the arithmetic operation control section 60 comprises a map information storage section 69, a map draw section 63A, a map management section 63, a screen management section 65, an input management section 66, voice output management section 68 and an overall management section 61 for managing each of these components. Then, the arithmetic operation control section 60 conducts route search from a current position to a declination by managing each of these components like conventional navigation systems and provides a route guidance up to the destination with voice and pictures by following a detected route.

The map management section 63 manages the map information storage section 69 and the map draw section 63A and manages map so as to provide map information corresponding to the current position sent from the current position measuring section 62 and route information up to the destination. The map management section 63 is connected to the disk control unit 71.

The map information storage section 69 is connected to the disk control unit 71 and includes a first map information storage section 69A and a second map information section 69B. The respective storage sections memorize map information corresponding to the current position and route information up to the destination. Then, information stored in the first map information storage section 69A is managed by the map management section 63.

Although the map information storage section 69 is constituted of, for example, a RAM, it may be constituted of a plurality of RAMs.

The map draw section 63A is constructed to draw various picture data such as maps, roads, buildings, guidance symbols and the like.

The screen management section 65 is connected to the display unit 70 and manages the map draw section 63A so to output a drawn picture data to the display unit 70.

The input management section 66 is connected to the switch input management section 67 so as to manage input data.

The voice output management section 68 outputs a route guidance with voice during a traveling up to the destination detected by the overall management section 61.

Next, the operation of the navigation system as described above will be described.

First, the overall management section 61 of the arithmetic operation control section 60 conducts route survey from a current position to a destination if the destination is input from the switch input management section 67. This route search utilizes information from the external information storage medium 59 like conventional navigation system. The detected route information and map information corresponding to the current position are stored in the first map information storage section 69A provided in the map information storage section 69.

Then, if a driver starts traveling with a vehicle, based on information stored in the map information storage section 69, a map reduced by a specified scale around a current position measured by the current position measuring section 62 is displayed on the display unit 70 under the management of the screen management section 65.

A map and a traveling route displayed in the display unit 70 is scrolled with a traveling of a vehicle such that they are displayed with a vehicle position located in the center of the screen. Further, the indication of the display unit 70 is displayed with its heading upward and with a change in traveling direction of the vehicle, a map or the like displayed on the screen rotates such that the traveling direction of the vehicle is always displayed upward.

Next, when route information and map information are output to, the display unit 70 based on the first map information storage section 69A, information of an external information storage medium (second) different from information of the external information storage medium 37a or 37b (first) used in the first map information storage section 69A may be sometimes necessary. For example, if the external information storage medium is changed for example, from a nation-wide version CD-ROM37a to a local version CD-ROM37b or from a sightseeing version CD-ROM to a local version CD-ROM, or the like, route information and map information ahead of the current position of a vehicle based on the first medium are preliminarily memorized in the first map information storage section 69A. After they are memorized in the first map information storage section 69A, reading from the first medium is stopped and the second medium is selected by the storage medium selecting unit 72 and read by the disk control unit 71.

Then, based on a current position measured by the current position measuring section 62 and destination information memorized by the first map information storage section 69A, the detected route information and map information are memorized in the second map information storage section 69B. By a request for switching the display by an external input, the map information storage section 69 changes from the first map information storage section 69A to the second map information storage section 69B. As when information of the first map information storage section 69A is input to the display unit 70, depending on information of the second map information storage section 69B, a map reduced with a specified scale around the current position of a vehicle is displayed on the display unit 70 under the management of the screen management section 65.

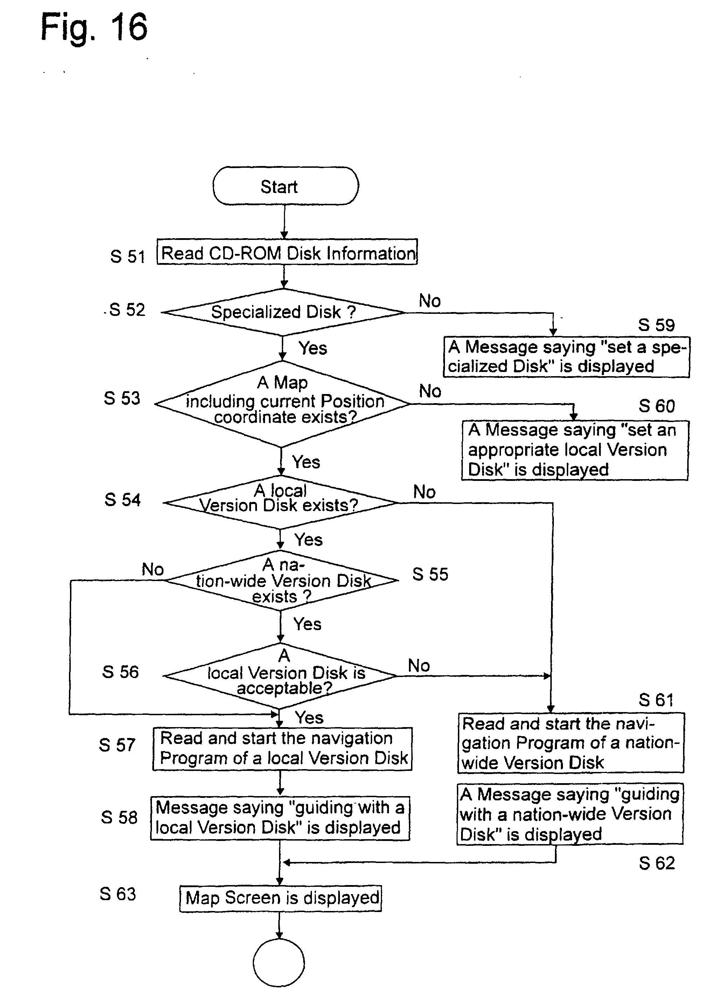

Hereinafter, a program loading flow (1) which is a basic of this vehicle navigation system will be described with reference to Fig.16.
(1) First, which disks are contained in a CD changer is checked as to all disks contained in the CD changer (step S51). That is, whether or not the nation-wide version CD-ROM37a, the local version CD-ROM37b, other music CD, or game related CD or the like for activating the navigation system is checked.
(2) Next, whether or not a navigation specialized disk is contained in the changer (step S52). Namely, whether or not the nation-wide version CD-ROM37a or the local version CD-ROM37b is loaded is checked.
(3) If no specialized CD is loaded therein, an alarm message, for example, saying "Insert a specialized disk" is displayed on the display unit 70 (step S59).
(4) If specialized disks are loaded, whether or not there is a map containing the current position coordinate of the vehicle is checked as to all specialized disks (step S53).
(5) If there is no map containing the current position coordinate thereof, an alarm message, for example, saying "Set an appropriate local version disk" is displayed on a display screen of the display unit 70 (step S60).
(6) Whether the map disk containing the current position coordinate of the vehicle is a local version CD-ROM or a nation-wide version CD-ROM is checked (step S54).
(7) If the judgement in step 53 is "yes", there is either a local version disk or a nation-wide version disk, if the judgement in step S54 is "No", a navigation program of the nation-wide version CD-ROM is read in and memorized in the map information storage section 69 (e.g., a flush memory) disposed in the navigation system so as to activate a program (step S61). Next, a message, for example, saying "Guiding by nation-wide version CD-ROM" is displayed (step S62).
(8) If a local version CD-ROM37b exists in step S54, whether or not a nation-wide version CD-ROM as other CD-ROM exists is checked (step S55). If no nation-wide version CD-ROM37a exists, a navigation program of the local version CD-ROM is read and memorized in the map information storage section 69 disposed in the navigation system so as to activate the program (step S57). Then, a message, for example, saying "guiding by local version CD-ROM?" or the like is displayed (step S58).
   If the nation-wide version CD-ROM37a is loaded, by providing a local version CD-ROM use confirmation switch further, a user is urged to judge whether or not he will use the local version CD-ROM (step S56). If he judges that he will use it, the local version CD-ROM startup processing steps S57 and S58 are executed. If the user refuses to use the local version CD-ROM 37b, the nation-wide version CD-ROM37a startup processing S61 and S62 are executed.
(9) Depending on the kind of a CD-ROM to be activated, map display processing is carried out to display an appropriate map on a display screen of the display unit 70 (step S63).

Like this, whether or not a CD-ROM loaded in the CD changer is a navigation specialized disk is judged and at the same time, whether or not the navigation specialized disk contains map data including the current position coordinate is judged. Further, whether a nation-wide version CD-ROM or a local version CD-ROM37b exists is judged and if a local version CD-ROM 37b exists, the local version CD-ROM 37b is used with priority.

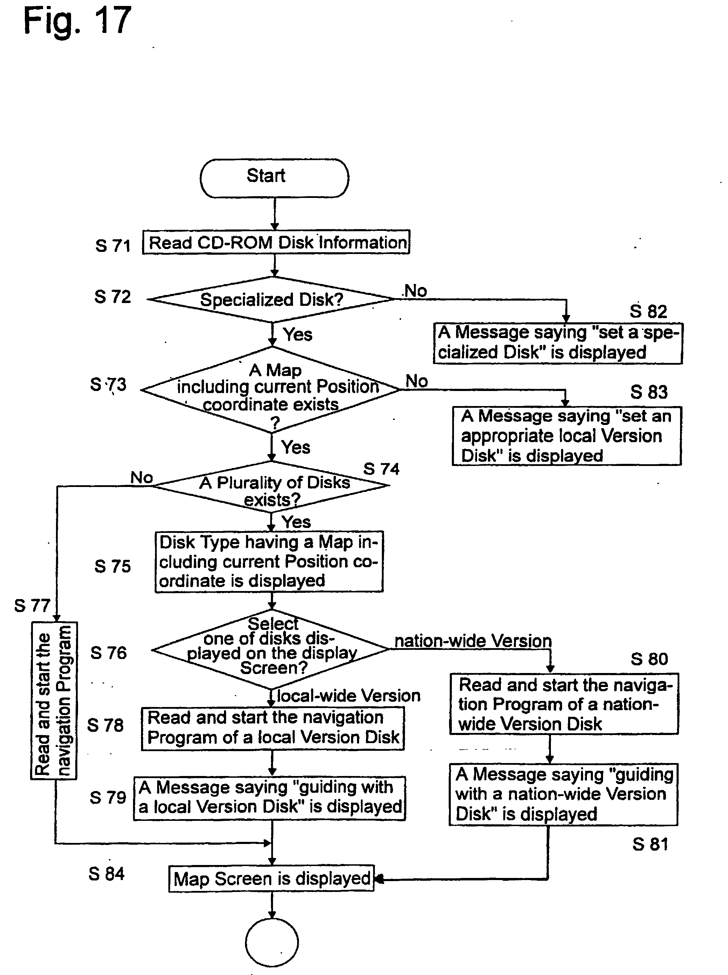

Next, program loading flow (2) of a case in which this vehicle navigation system is equipped with a plurality of CD-ROMs will be described with reference to Fig.17.
(1) Which disks are loaded in the CD changer is checked as to all disks loaded in the CD changer (step S71). Namely, whether or not a nation-wide version CD-ROM37a, a local version CD-ROM37b, a sightseeing version CD-ROM, a music version CD-ROM, a game version CD-ROM or the like is loaded is checked.
(2) Whether or not a navigation specialized disk is loaded in the changer is checked (step S72). Namely, whether or not a nation-wide version CD-ROM, a local version CD-ROM, or a sightseeing version CD-ROM is loaded is checked.
   If no specialized disk is loaded, an alarm message, for example, saying "Insert a specialized disk" is displayed on a display screen of the display unit 70 (step S82).
(3) If specialized disks are loaded, whether or not there is a map containing the current position coordinate of the vehicle is checked as to all the specialized disks (step S73).
   If there is no map including the current position coordinate thereof (e.g., the nation-wide version CD-ROM is not loaded), an alarm message, for example, saying "Set a map disk of a corresponding area" is displayed on a display screen of the display unit 70 (step S83).
(4) Whether there are a plurality of specialized disks containing the current position coordinate thereof is checked (step S74).
   If only one specialized disk is loaded, the navigation program of that CD-ROM is read and memorized in the map information storage section 69 disposed in the navigation system so as to activate that program (step S77).
   If there are two or more specialized disks, the types of these disks are displayed on a display screen of the display unit 70 (step S75) such that user can select a disk which he needs (step S76).
(5) Of the types of the disks displayed on the display screen of the display unit 70, one disk is selected, and if the selected CD-ROM is a local version CD-ROM37b, the navigation program of the local version CD-ROM37 b is read and memorized in the map information storage section 69 disposed in the navigation system so as to activate that program (step S78). Then, a message saying "using local version CD-ROM37b" is displayed (step S79).
   If the selected disk is a nation-wide version CD-ROM37a, the navigation program of the nation-wide CD-ROM37a is read and memorized in the map information storage section 69 disposed in the navigation system so as to activate that program (step S80). Then, a message saying"using nation-wide CD-ROM" is displayed (step S81). If the selected disk is a sightseeing version CD-ROM, as in the case of the nation-wide version CD-ROM 37a and the local version CD-ROM 37b, the navigation program of the sightseeing version CD-ROM is read and memorized in the map information storage section 69 disposed in the navigation system so as to activate that program. Then, a message saying "guiding by sightseeing version disk" is displayed.
(6) Depending on the kind of a CD-ROM to be activated, map display processing is performed to display the map on a display screen of the display unit 70 (step S84).

Like this, whether or not the disk contained in the CD changer is a navigation specialized disk is judged and then, whether that navigation specialized disk has map data including the current position coordinate is judged. If there are two or more disks having the current position coordinate, their disk names are displayed on the display screen of the display unit 70 and user is urged to decide which disk to use.

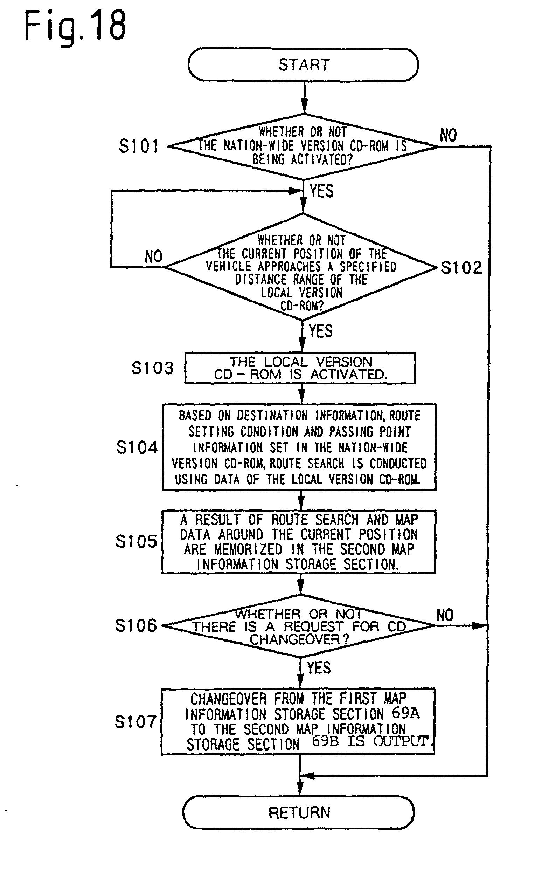

Next, route search information holding flow (1) at the time of automatic switching between the nation-wide CD-ROM and the local version CD-ROM during vehicle traveling will be described with reference to Fig.18.
(1) Whether or not the nation-wide version CD-ROM37a is being activated is judged (step S101).
(2) If YES is answered in step S101, whether or not the current position of the vehicle approaches a specified distance range of the local version CD-ROM37b is judged, (step S102).
(3) If NO is answered in step S102, this step is repeated.
(4) If YES is answered in step S102, the local version CD-ROM37b is activated (step S103).
(5) Next, based on destination information, route setting condition and passing point information set in the nation-wide version CD-ROM37a, route search is conducted using data of the local version CD-ROM37b (step S104).
(6) Then, a result of route search and map data around the current position are memorized in the second map information storage section 69B (step S105).
(7) Next, whether or not there is a request for CD changeover is checked (step S106).
(8) If YES is answered in step S106, changeover from the first map information storage section 69A to the second map information storage section 69B is output (step S107).
(9) If NO is answered in step S106, changeover from the first map information storage section 69A to the second map information storage section 69B is not output and then return is input.

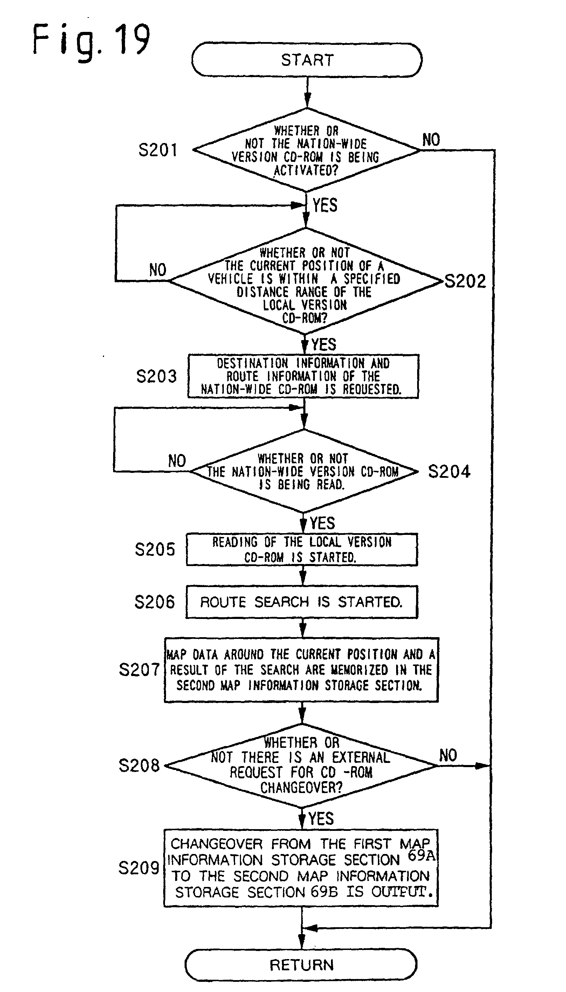

Next, route search information holding flow (2) at the time of automatic changeover from a nation-wide version CD-ROM and a local version CD-ROM during a traveling of a vehicle will be described with reference to Fig.19.
(1) Whether or not a nation-wide version CD-ROM37a is being activated is judged (step S201).
(2) If YES is answered in step S201, whether or not the current,position of a vehicle is within a specified distance range in the local version CD-ROM is judged (step S202).
(3) If NO is answered in step S202, this step is repeated.
(4) If YES is answered in step S202, destination information and route information of the nation-wide CD-ROM37a is requested (step S203). Then, the destination information and the route information are memorized in the first map information storage section 69A.
(5) Next, whether or not the nation-wide version CD-ROM37a is being read is checked (step S204).
(6) If NO is answered in step S204, this step is repeated.
(7) If YES is answered in step S204, reading of the local version CD-ROM37b is started (step S205).
(8) Next, route search is started (step S206).
(9) Map data around the current position and a result of the search are memorized in the second map information storage section 69B (step S207).
(10) Next, whether or not there is an external request for CD-ROM changeover is checked (step S208).
(11) If YES is answered in step S208, changeover from the first map information storage section 69A to the second map information storage section 69B is output (step S209).
(12) If NO is answered in step S208, changeover from the first map information storage section 69A to the second map information storage section 69B is not output and return is input. During a traveling of a vehicle with a display based on the nation-wide version CD-ROM or the local version CD-ROM, a quite detailed map such as a residential map is sometimes requested.

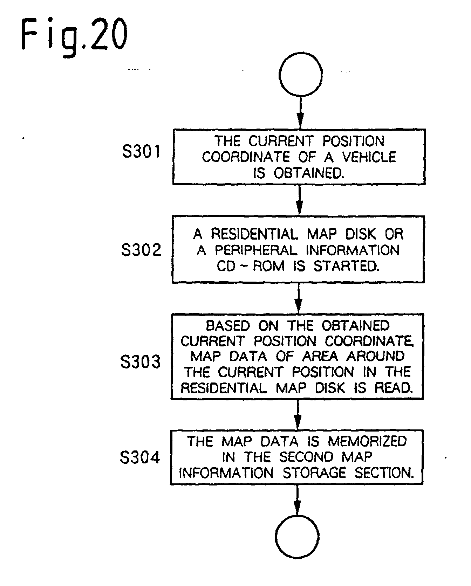

Fig.20 shows a flow for changeover to a residential map disk having detailed map information when a detailed map is needed.
(1) First, the current position coordinate of a vehicle is obtained (step S301).
(2) Next, a residential map disk or a peripheral information CD-ROM is started (step S302).
(3) Then, based on the obtained current position coordinate, map data of area around the current position in the residential map disk is read (step S303).
(4) Then, that map data is memorized in the second map information storage section 69B (step S304). Such a processing is automatically conducted in an area whose residential map disk is available.

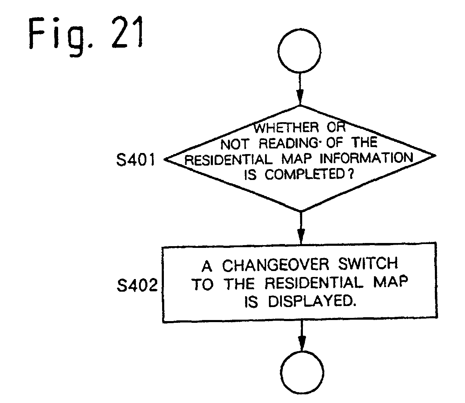

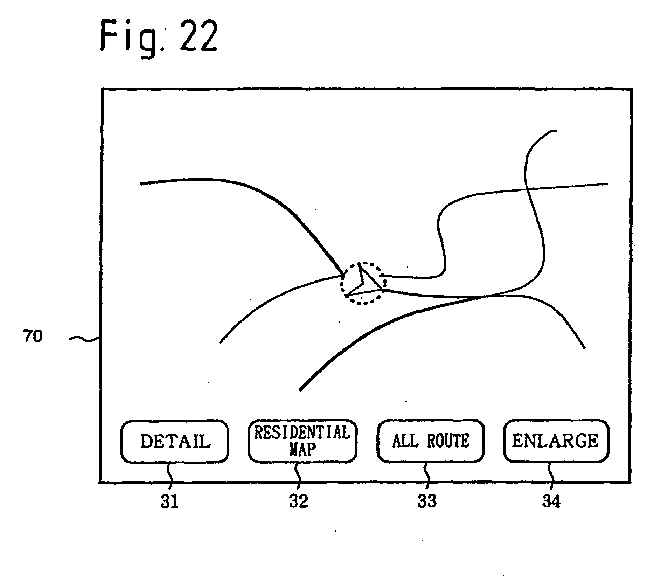

Further, residential map display flow will be explained with reference to Fig.21.
(1) If in the processing shown in Fig.20, map data is memorized in the second map information storage section 69B (step S304), whether or not reading of the residential map information is completed is checked (step S401).
(2) To notify outside that the residential map data can be displayed on the screen, if YES is answered in the above-mentioned step S401, a changeover switch to the residential map is displayed (step S402). For example, in this case, as shown in Fig.22, a detail key 31, a residential map key 32, an all route key 33, or an enlarge key 34 is displayed on the display screen of the display unit 70. Here, any key of the detail key 31, the residential map key 32, the all route key 33 and the enlarge key 34 can be selected. If the residential map key 32 is selected, map information and route information based on the residential map disk memorized in the second map information storage section 69B is output and displayed.

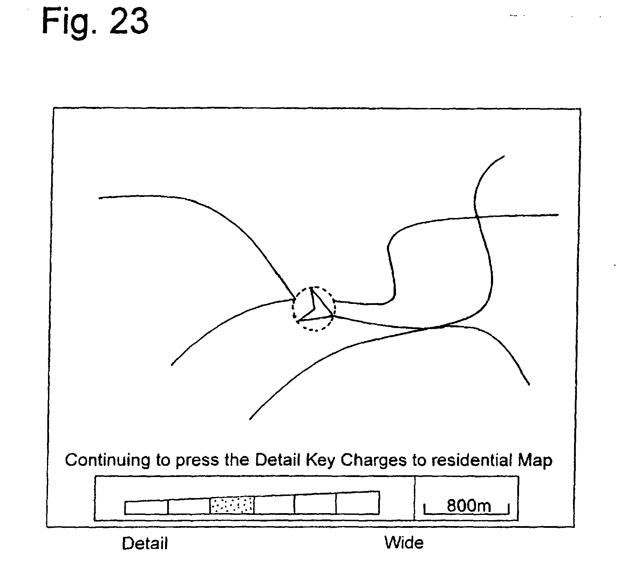

If the detail key 31 is kept to be pressed, as shown in Fig.23, a screen including a scale bar is displayed. It is permissible to construct so as to display map information and route information based on the residential map disk if the detail key 31 is kept to be pressed further.

Further, it is permissible to provide a construction wherein the display screen shown in Fig. 23 can be displayed at the processing in which the changeover switch to the residential map is displayed (step S402).

Further, a further embodiment will be described with reference to the drawings.

There is provided a navigation system in which a route up to an input destination is searched and route guidance is carried out following the searched route, the navigation system comprising: a plurality of map information storage means (CD-ROM 37a-37e) in which at least one of map information (road map data or residential map data) for conducting route guidance following that route is stored; a range information extracting means (step SB5) for extracting the geographical coordinate range (coordinate range ZP) of the aforementioned map information from each of the plurality of the map information storage means; a current position detecting means (current position detecting unit 2, step SA2) for detecting the current position coordinate (current position data MP, guidance start point data SP) of a vehicle; a map information selecting means (steps SB6, SB7, SB8, SB39, SB41, SB44, SB61) for selecting a map information storage means in which the current position coordinate detected by the current position detecting means is contained in a geographical coordinate range extracted from the range information extracting means, from the plurality of the map information storage means; and a read/display means (display 12, step SB13) for reading the map information from the aforementioned map information storage means selected by the map information selecting means and displaying it.

There is provided a navigation system in which a route up to an input destination is searched and route guidance is conducted following this route, the navigation system comprising: a plurality of map information storage means (CD-ROM 37a-37e) in which at least one of map information (road map data or residential map data) for guiding the aforementioned route is stored; a field information extracting means for extracting the field of the aforementioned map information from each of the plurality of the map information storage means; a destination field detecting means (step SA4, step SB51) for detecting the aforementioned input field, purpose or genre of the destination; a map information selecting means (step SB54) for selecting a map information storage means in which the field, purpose or genre of the destination detected by this destination field detecting means corresponds to the field, purpose or genre extracted by the aforementioned field information extracting means, from the plurality of the map information storage means; anda reading/display means (step SB13, display 12) for reading and displaying the aforementioned map information from the aforementioned map information storage means selected by this map information selecting means.

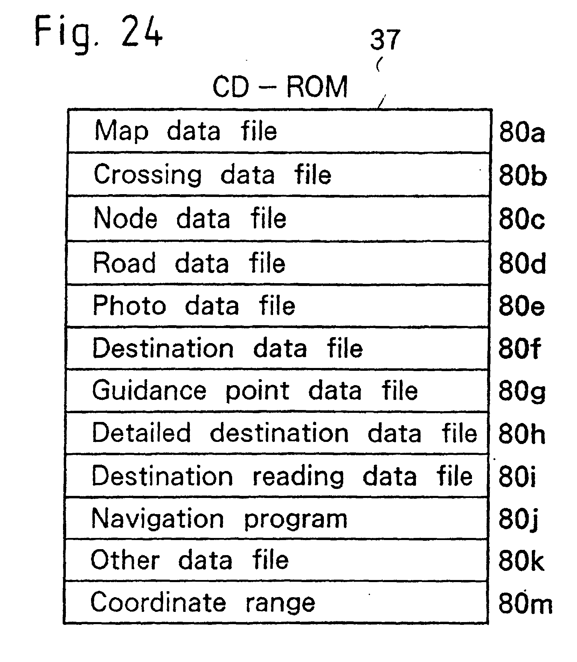

Fig.24 shows the kinds of information to be recorded into the CD-ROMs 37a-37e. In each of the CR-ROMs 37a-37e, a map data file 80a, a crossing data file 80b, a node data file 80c, a road data file 80d, a photo data file 80e, a destination data file 80f, a guidance point data file 80g, a detailed destination data file 80h, a destination reading data file 80I, a navigation program 80j, other data file 80k and coordinate range 80m are formed. The map data file 80a is classified to two kinds of map data, road map data and residential map data.

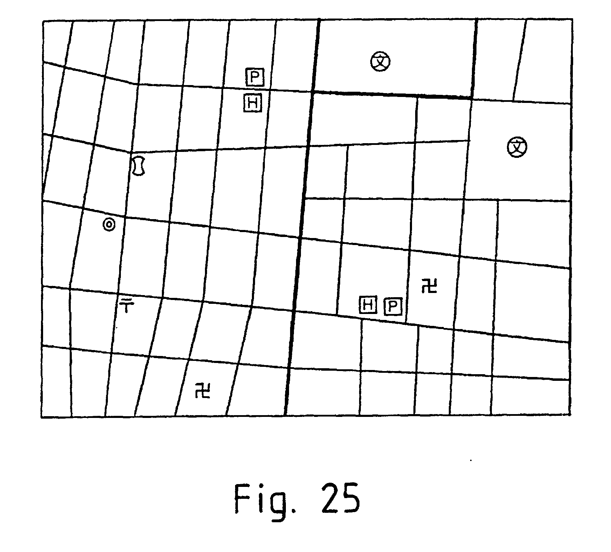

Fig.25 shows a map enlarged with maximum scale, displayed on the display 12 on a basis of road map data. This road map data is a map data covering nation-wide roads and a map data covering only the roads in a block which is obtained by dividing the whole country into several blocks. The range of this road map data differs depending on the respective CD-ROMs 37. Namely, a certain CD-ROM 37 is a nation-wide version in which data on major roads of the country is recorded and another CD-ROM 37 is a local version in which data on roads existing in a single area (e.g., Kanto area, Chubu area, and the like).

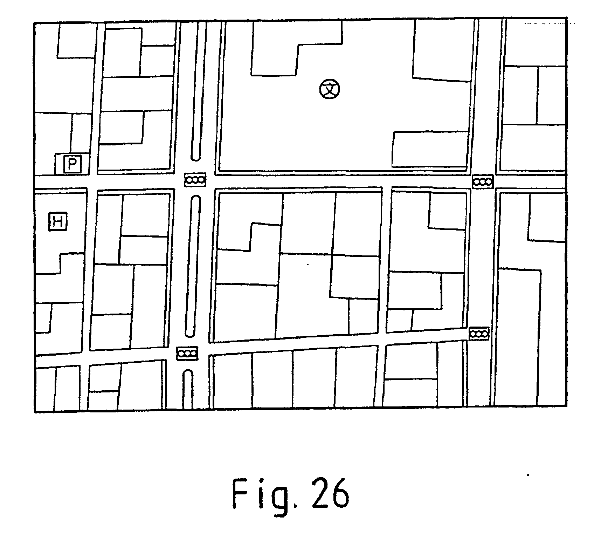

Fig.26 shows a residential map data recorded in the CD-ROM37, displayed on the display 12. This residential map data is data for indicating a residential map of a particular section such as a major city, a local city, a town, village and the like, existing in the above mentioned road map data. That is, the road map data is a relatively simplified map data drawn around roads necessary for navigation operation and the residential map data is a locally limited map data in which houses, buildings, roads, rivers and the like are described with accurate reduction scale. In this residential map, it is possible to recognize a shape of a building, facility, bridge or the like with coordinates and appearances such as the shape and the like of a part or all of the buildings, lands and the like contained in a map displayed on the screen are displayed. For example, the shapes of all buildings in a certain section surrounded by roads, a river, pond and the like are displayed.

Meanwhile, the road map data recorded in each of the CD-ROMs may include a plurality of maps of the same area having different reduced scales or include a single road map data of the minimum reduced scale. Likewise, the residential map data may include a single reduced scale data of the same area or may include a plurality of map data having different reduced scales. In a display screen of a road map based on road map data as shown in Fig.25, roads are identified with lines having a different size and color. For major buildings, facilities and the like, a symbol mark is indicated in the center coordinate of a place where it exists. Although graphic representation of other information is omitted, geographical information such as building and facility names, major road names, geographical names of cities, towns and villages, and traffic restriction marks such as one-way pass are displayed.

On the other hand, the residential map is a map further enlarged as compared to the road map of the minimum reduced scale as shown in Fig.25 or a map of the same reduced scale. In this residential map, the ratio of respective road widths is the same as the ratio of actual roads and further sidewalks and footbridges are also displayed. Additionally, the shapes of rivers, buildings, facilities and the like are represented with the same ratio as that of the actual dimensions.

The crossing data file recorded in the CD-ROM 37 is data concerning the name, location and the like of a crossing. Likewise, the node data file is coordinate data or the like of nodes specified on each road. The road data file is data concerning roads including the name and kind of a road, number of its lanes, connection between roads and the like. The photo data file is picture data of photographs showing places required to be visually displayed such as various facilities, sightseeing spots, major crossings and the like.

The destination data file is data concerning a destination such as the location, name and the like of a place and facility which may be an objective point such as major sightseeing spots, buildings, and corporations and factories registered in yellow pages. The guidance point data file is guidance data for a place requiring a guidance about the content of a guidance mark plate installed on a road and instructions about a junction. The detailed destination data file is data further detailed of a destination memorized in the above-mentioned destination data file. The destination reading data file is list data for retrieving a destination memorized in the above destination data file by its reading.

The house shape data file is house shape data and identification data concerning the house shape for indicating the house shape corresponding to the above mentioned residential map data. The house shape mentioned here refers to a plan view of a place sectioned in plan view such as an actual building, a facility, a road, a river and the like, about its section, building, land and the like, or three-dimensional appearance of a place represented horizontally with a perspective view or the like. Although the house shape is used for convenience, the house shape includes places other than the house such as the facility land, the road, the pond, and the like. The house shape data includes coordinate data of each corner of the external shape of the above mentioned building, external information about the horizontal shape, three-dimensional shape and the like of a building and internal information indicating detailed information belonging to the building. For example, it includes residential address, name, owner's name, telephone number, work type, neighboring road data and the like. This house shape data, the content and display method of the above mentioned residential map data are described in detail in the specifications and drawings of Japanese Patents Publication No. H09-152831 and Publication No. H09-159481.

The navigation program stored in each of the CD-ROMs 37 is used for conducting route search from the current position to a destination based on road map data memorized in an appropriate CD-ROM 37. Further, if the appropriate CD-ROM 37 is a CD-ROM to be used for sightseeing and other particular purposes, the navigation program includes a program corresponding to that particular purpose also. For example, the sightseeing CD-ROM 37 contains a program for notifying a user of sightseeing information of each region. This navigation program is read from the CD-ROM 37, written into the first RAM 43 and executed by the CPU 40. That is, the first RAM has a function as a shadow RAM.

Other data files to be stored in the CD-ROM 37 include an address data file for retrieving the above-mentioned destination based on its address, a telephone number list file for retrieving the above-mentioned destination from its telephone number, data file concerning a destination registered by a user such as a customer or a person having a business connection, and the like. Further, the coordinate range 80m is data recording the latitude and the longitude of a road located on the northernmost end, the southernmost end, the easternmost end and the westernmost end in the geographical coordinate of each road having the above-described road map data. That is, the coordinate range 80m indicates the geographical coordinate range of road map data to be recorded in each of the CD-ROM37.

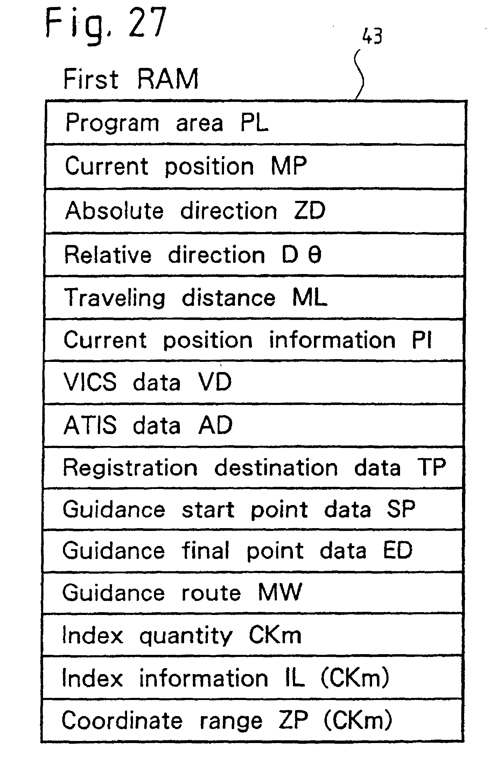

Fig.27 shows part of data group stored in the first RAM. A program stored in the aforementioned CD-ROM 37 is copied in a program area PL. Current position data MP is data for indicating the current position of a vehicle and detected by the current position detecting unit 20. Absolute direction data ZD is data for indicating the north-south direction and obtained on a basis of information from the absolute direction sensor 24. Relative directional angle data Dθ is data of angle formed by the traveling direction of the vehicle with respect to the absolute direction data ZD, and obtained on a basis of information from the relative direction sensor 25.

Traveling distance data ML is a traveling distance of the vehicle and obtained on a basis of data from the distance sensor 26. Current position information PI is data concerning the current position and input through the beacon receiver unit 22, the data transmitting/receiving unit 27 or the data transmitting/receiving unit 27. VICS data VD are data of a "Vehicle Information and Communication System ". ATIS data AD are data of an "Advanced Traffic Information System".

Registered destination data TP is data registered by a user, concerning the destination, such as the coordinate position, name and the like of the destination. Likewise, final guidance point data ED is coordinate data on a map of a position in which the navigation operation is terminated.

Guidance start point data SP is the coordinate of a node most adjacent to the current position of the vehicle. The reason why this guidance start point data SP is memorized is that, the current position of the vehicle depending on the current position data MP is located, for example, within a certain site such as a golf course and a parking lot and not always located on a guidance road. Likewise, guidance final point data ED is also the coordinate of a node most adjacent to the registered destination data TP. The reason why this guidance final point data ED is stored therein is that the registered destination data TP is not always located on a guidance road.

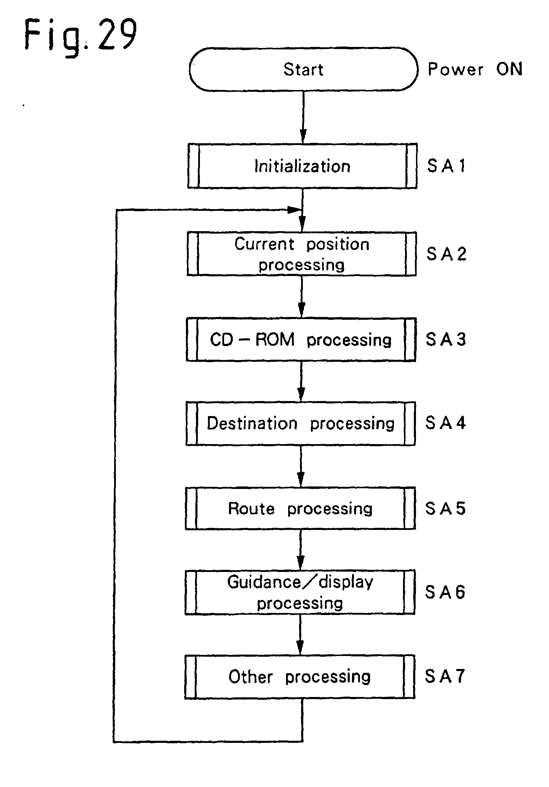

These data SP and ED are determined in a route processing of step SA5 in Fig.29 described later.

Guidance route data MW to be memorized in the first RAM 43 is data for indicating an optimum route up to a destination and a recommended route and obtained by route processing in step SA5. Respective roads in a road map memorized in the CD-ROM 37 have inherent road numbers. This guidance route data MW is a string of the aforementioned roads from the guidance start point data SP to the final guidance point data ED, and obtained in route processing.

Disk quantity data Ckm is data for indicating the quantity of the CD-ROMs stored in the changer 5. Index information IL(CKm) is data for indicating to which field, purpose or genre a CD-ROM 37 stored in the changer 5 belongs. This field (field, purpose or genre) is the field, purpose or genre of information relating to a major destination for navigation, for example, covers public facility genre including a nation-wide version, a local version, governmental office, hospital, park, police station, and post office, traffic facility genre including railways station, crossing, airport, harbor, express road interchange, parking area, and service area, cultural facility genre including shrine, temple, historically famous spot, remain, and castle, amusement facility genre including zoo, botanical garden, amusement park, aquarium, karaoke house, and game center, sport/leisure facility genre including fishing park, diving spot, camping field, golf course, and skiing area, lodging facility genre including hot spring and hotel, dietary facility genre including cafe, hamburger shop and restaurant, automobile facility genre including gas station, and automobile sale/repair shop, and shopping facility genre including bank, cash corner, drug store, department store, book shop, music shop and clothes shop. In addition, this field, purpose and genre mentioned here includes the field, purpose and genre of a CD-ROM 37 in which programs and data of simple game, Karaoke music, quiz, music and movie are memorized.

Each of the CD-ROMs 37 contains information for identifying to which field, purpose or genre the CD-ROM 37 is objective and this identification information is read out from the CD-ROM 37 and memorized as the index information IL (Ckm). Meanwhile, as for this index information IL (Ckm), Ckm pieces of such information exist corresponding to the respective CD-ROMs 37. That is, information concerning the field, purpose and genre of the CD-ROM located on the Ckm position in the changer 5 is index information IL (Ckm).

Coordinate range ZP (Ckm) is a copy of coordinate range 80m written and stored in the CD-ROM for navigation. This coordinate range ZP (Ckm) is the maximum value and the minimum value of the latitude and longitude of a road map recorded in each of the CD-ROMs. This clarifies a geographical range covered by the road map in each CD-ROM for navigation. Meanwhile, as for this coordinate range ZP, Ckm pieces thereof exist corresponding to each CD-ROM 37 like the index information IL.

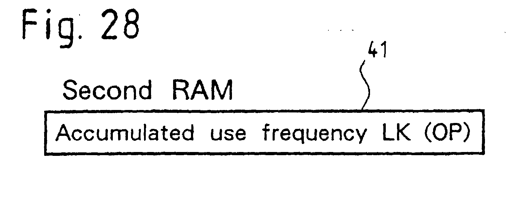

Fig.28 shows information and data to be written into the second RAM 41. An accumulated use frequency LK(OP) is memorized in this second RAM 41. This accumulated use frequency LK(OP) indicates which CD-ROM was used how many times in the navigation system. In the meantime, the variable (OP) is a variable for identifying the accumulated use frequency LK in terms of field (field, purpose or genre) and indicates the kind of the field. For example, OP=1 indicates a field of golf course and OP=2 indicates a field of sightseeing place.

Fig.29 shows a flow chart of the overall processing of the navigation system which is to be executed by the CPU 40. This processing is started by turning on power and forcibly terminated by turning off power. This turning on/off of power refers to turning on/off of the power of the navigation system or turning on/off of the engine start key (ignition switch) of a vehicle. In this processing, first, initialize processing of the CPU 40, the RAM 41 or 43, the picture memory 44 and the like is performed (step SA1). Then, current position processing (obtaining the current position, etc.) (step SA2), CD-ROM 37 processing (content recognition, etc.) (step SA3), destination processing (destination setting, etc.)(step SA4), route processing (route search, etc.) (step SA5), guidance/display processing (step SA6) and other processings (step SA7) are carried out repeatedly.

In the aforementioned current position processing (step SA2), on a basis of signals received from a plurality of satellites, the coordinate position of each satellite, radio transmission time of the satellite and radio reception time by the GPS receiver unit 21 are identified. Then, according to those pieces of information, a distance to each satellite is calculated and further, according to the distance to each satellite, the coordinate position of the vehicle is calculated and then the current position thereof is obtained. This obtained coordinate position of the vehicle is stored in the first RAM 43 as the current position data MP. This current position data MP may be corrected by information input from the beacon receiver unit 22 or the data receiver unit 23.

On a basis of the absolute direction data, the relative direction data and the traveling distance data, arithmetic operation for specifying the current position of the vehicle is conducted. The current position thereof obtained by this arithmetic operation is compared with the map data in the external data and corrected such that the current position on the map screen is displayed correctly. By this correction processing, even when the GPS signal cannot be received because the vehicle is traveling in a tunnel or the like, it is possible to obtain the current position of the vehicle accurately.

In the above mentioned CD-ROM processing (step SA3), the content of the CD-ROM 37 stored in the changer 5 is recognized and a CD-ROM for use for display and processing in the navigation system is automatically selected. This CD-ROM 37 processing is executed when the power is turned on and after the power is turned on, as described later, executed only when a new CD-ROM 37 is stored in the changer 5. At other times, this processing is jumped over.

In the aforementioned destination processing (step SA4), in a road map or a residential map displayed on the display 12, a coordinate position is specified by a user or a destination is specified by the user by selecting it from a destination list of each item displayed on the display 12. If the destination specification procedure by the user is performed, the central processing unit 4 memorizes information data of the coordinate or the like of the destination in the first RAM43 as the registered destination data TP. This information data of the coordinate or the like of the destination includes the house shape data of the residential map, places where the vehicle stops on a way to the destination and the like. This destination processing is jumped over if setting of a new destination or anew place where the vehicle stops or changing thereof is not carried out.

In the aforementioned route processing (step SA5), an optimum route from the guidance start point data SP to the final guidance point data ED through the aforementioned stop place is searched. In the meantime, the optimum route mentioned here is a route which allows reaching of the destination in the shortest time or with the shortest distance or if an express road is used, route which allows reaching of the destination in the shortest time or with the shortest distance by using the express road or a route which allows reaching of the destination or a stop place by passing as wide a road as possible. The aforementioned guidance start point data SP is a road objective of guidance, which is the same as the current position data MP or near the current position data MP. In the meantime, if the current position of the vehicle deviates from a guidance route, an optimum route from the current position in which the vehicle deviates to the final guidance point through the aforementioned stop place is automatically searched again.

In the aforementioned guidance/display processing (step SA6), a guidance route obtained by the aforementioned route processing (step SA5) is displayed in a map screen displayed on the display 12 with a bold line of red, blue or other conspicuous colors. Then, guidance information is announced audibly from the speaker 16 for the vehicle so as to travel along this guidance route and guidance information is displayed in the map screen of the display 12. For pictures for indicating the guidance route, road map data around the current position or residential map data around the current position is used. Changeover between the road map data and the residential map data is carried out by a distance up to a guidance point (destination, stop place, crossing or the like), the velocity of the vehicle, whether the vehicle is outside or inside of a representable area, or switch operation. Further, in the vicinity of a guidance point (destination, stop place, crossing or the like), an enlarged map in the vicinity of a guidance point is displayed. Instead of the road map, it is permissible to display a simplified guidance route in which only minimum information about the guidance route and destination or the direction of a stop place and current position or the like is displayed by omitting geographical information.

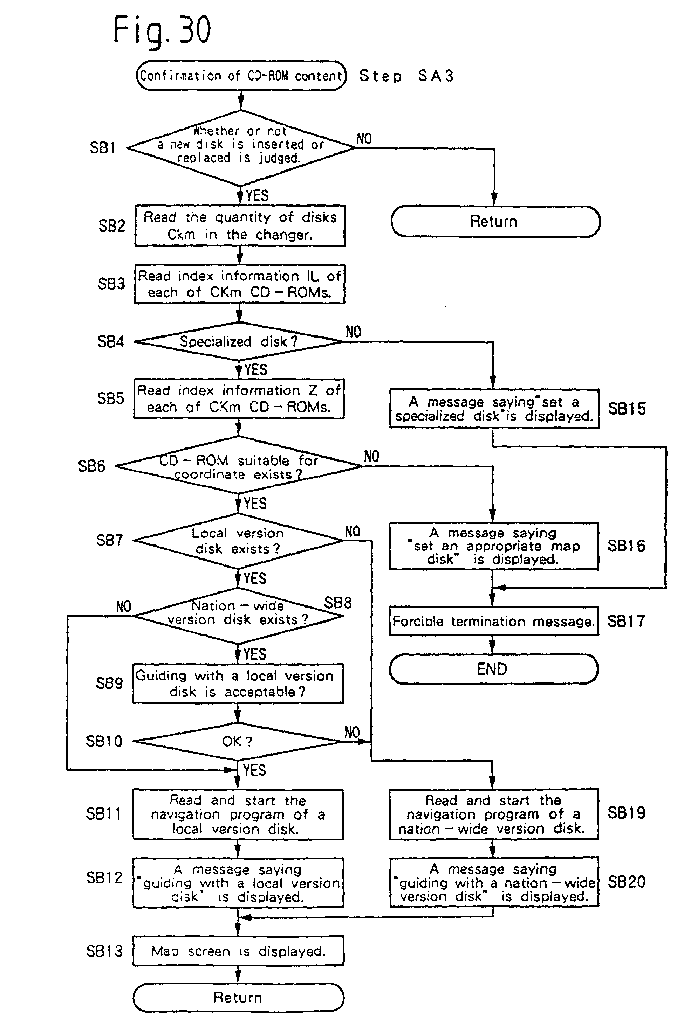

Fig.30 shows a flow chart of the first example of a program to be executed by the CPU 40 or the like of the navigation system of The present invention. In this processing, the local version CD-ROM 37 is automatically selected in preference to the nation-wide version. The processing of Fig.30 indicates the content of the "CD-ROM processing" subroutine (step SA3) in the main flow (overall processing) shown in Fig.29. In this subroutine, to execute the "route processing" subroutine (step SA5) in the main flow as much optimally as possible, a processing for selecting a suitable CD-ROM 37 from the CD-ROMs stored in the changer 5 is carried out.

First, whether or not the power is turned on by the CPU 40 or a new CD-ROM 37 is stored in the changer 5 is judged (step SB1). The judgment of whether the power is turned on is based on the turned-on state of the aforementioned navigation system power or the vehicle start key. The judgment on whether the CD-ROM 37 is stored is based on whether or not the changer 5 door is opened or closed and a CD-ROM 37 is loaded on a tray thereof. This is detected by a change of the contact switch provided on each tray with a passage of time. Concretely, the CPU of the data transmitting/receiving section 39 monitors the state of the contact switch of each tray at every interval of a specified time and if the state of any contact switch changes, the local CPU of the data transmitting/receiving section 39 transmits information to the CPU 40 through the I/O data bus 28 and the communication interface 47 by such a method as interruption and then an insertion of the CD-ROM is detected.

Next, under a command from the CPU 40, the quantity Ckm of the CD-ROMs stored in the changer 5 is judged by the local CPU provided in the data transmitting/receiving section 39 (step SB2). That is, depending on on/off of the contact switch disposed on each tray of the changer 38, whether or not a CD-ROM is contained in the tray is judged. Finally, the quantity of the CD-ROMs stored in the entire changer 5 is identified. Then, the identified numeric data Ckm is stored in the second RAM 41 as the quantity Ckm of the CD-ROMs.

Then, Ckm CD-ROMs 37 in the changer 5 are successively loaded on an optical head of the data transmitting/receiving section 39 by means of a loading device (not shown) disposed in the changer 5. Then, from the photo data file or the destination data file memorized in each of the CD-ROMs 37, information about the field (field, purpose or genre) or type is extracted and stored in the first RAM 5 as the index information IL (Ckm) (step SB3).

As a major objective of the navigation by each CD-ROM 37, a golf course may be registered or a sightseeing spot such as shrine and temple may be registered, such that the destination thereof is diversified. Thus, as described above, the index information IL (Ckm) is extracted from storage data in each CD-ROM and thus, its major destination of each CD-ROM is identified.

The CD-ROM used in this system includes non-navigation specialized disks such as for game, karaoke or the like. The index information IL (Ckm) is also read from such a non-navigation specialized CD-ROM. Meanwhile, the index information IL may be preliminarily stored in the CD-ROM 37. That is, in the CD-ROM 37, the index information for judging the field (field, purpose or genre) is stored. Then, the index information of that CD-ROM 37 is copied as the index information IL (Ckm) within the first RAM 43. Consequently, the index information IL (Ckm) is copied rapidly.

A variable (Ckm) attached to the ending of the index information IL (Ckm) indicates the index information IL is the index information IL read from the Ckm CD-ROM of the CD-ROMs stored in the changer 5. A variable (Ckm) for use in a description below has the same meaning.

If reading of the index information IL (Ckm) from Ckm CD-ROMs 37a-37e is completed, whether or not any navigation CD-ROM is stored in the changer 5 based on the aforementioned index information IL (Ckm)(step SB4). This is because if the CD-ROM 37 stored in the changer 5 is not a CD-ROM for navigation, the navigation operation for route search or the like cannot be implemented.

Therefore, if it is judged that no navigation CD-ROM 37 is stored in the changer 38 (NO in step SA4), the CPU 40 displays an alarm message saying "Set a specialized disk" on the screen of the display 12 (step SB15). In the meantime, it is permissible to notify an aural alarm message from the speaker 16 together with this alarm message. Then, after a message saying "forcible termination" is displayed on the screen of the display 12, the entire power of the navigation system is automatically turned off (step SB17). This power off processing of step SB17 may be omitted. Instead of this forcible termination, it is permissible to repeat the processing of step SB15 or return the processing to the main flow of Fig.29.

If YES is answered in judgment of step SB4, namely if a navigation CD-ROM 37 disk is stored in the changer 5, each coordinate range 80m memorized in that CD-ROM 37 is read from the navigation CD-ROM 37 in the changer 5 and stored in the first RAM 43 as the coordinate range ZP (Ckm) of the CD-ROM 37 (step SB5). That is, the geographical range of road map information stored in the CD-ROM 37 is identified.

Based on the coordinate range ZP (Ckm) read out and the current position data MP detected in the aforementioned step SA2, whether or not a CD-ROM 37 disk of the road map data including the current position coordinate of the vehicle exists in the changer 5 is judged (step SB6). If a CD-ROM 37 containing the current position coordinate of the vehicle does not exist in the changer 5 (NO in step SB6), an alarm message saying "set a map disk of an appropriate area" is displayed on the screen of the display 5. That is, the user is informed that no CD-ROM 37 with road map data which can indicate the current position of the vehicle exists in the changer 5 (step SB16). In this case, it is permissible to dispatch the same alarm audibly from the speaker 16.

On the other hand, if the CD-ROM 37 in which road map data including the current position coordinate exists within the changer 5, successively whether or not road map data of the CD-ROM 37 containing the current position coordinate is of a local version is judged (step SB7). This judgment is based on the value of the coordinate range ZP (Ckm). If any local version CD-ROM 37 does not exist in the changer 5 (NO in step SB7), it can be judged that only the nation-wide version CD-ROM 37 exists in the changer 5.

Then, that nation-wide version CD-ROM 37 disk is selected and a program for navigation memorized in that nation-wide CD-ROM 37 is read by the data transmitting/receiving section 39 and copied to the program area PL of the first RAM 43 (step SB19). A message saying "guiding by nation-wide version" is displayed on the screen of the display 12 (step SB20).

On the other hand, if any local version CD-ROM 37 is stored in the changer 5, successively whether or not a nation-wide CD-ROM 37 is also stored in the changer 5 is judged (step SB8). Then, if it is judged that the nation-wide version CD-ROM 37 is also stored in the changer 5, a message saying "guide by local version is acceptable?" and characters "YES" and "NO" are displayed (step SB9) and urges the user to decide whether or not this matter is acceptable(step SB10).

If a willing of "approval" is input by a user through the touch switch 11 or a silent approval by the user occurs while the touch switch is kept inoperative for a specified interval of time (YES in step SB10), a CD-ROM 37 in which a local version road map data is stored is selected from the trays of the changer 5. Then, the navigation program is copied from that CD-ROM 37 to the program area PL of the first RAM43 (step SB11). After that, a message saying "guiding by local version disk" is displayed on the screen of the display 12 (step SB12).

However, if NO is answered in step SB10 or a willing of disapproval is input by the user, a nation-wide version CD-ROM 37 in the changer 5 5 is selected. Then, the program is copied from that CD-ROM 37 to the program area of the first RAM 43 (step SB19) and a message saying "guiding by nation-wide version" is displayed on the screen of the display 12 (step SB20).

If the program of the CD-ROM 37 is copied to the program area PL in step SB11 or step SB19, the road map or the residential map is displayed on the screen of the display 12 on a basis of the current position data MP of the first RAM 43 such that the current position of the vehicle is located in the center of the screen of the display 12 (step SB13). Then, the "CD-ROM processing" subroutine shown in Fig.30 is terminated and the processing is returned to the main flow shown in Fig.29.

As described above, according to this example, whether or not the navigation CD-ROM 37 is stored in the changer capable of storing a plurality of the CD-ROMs 37 is automatically judged and if the navigation CD-ROM 37 is stored, the nation-wide version or the local version CD-ROM 37 is automatically selected. Thus, a procedure of selecting of the CD-ROM 37 manually and confirming of the content of the selected CD-ROM 37 can be eliminated, and it is possible to start more comfortable navigation operation.

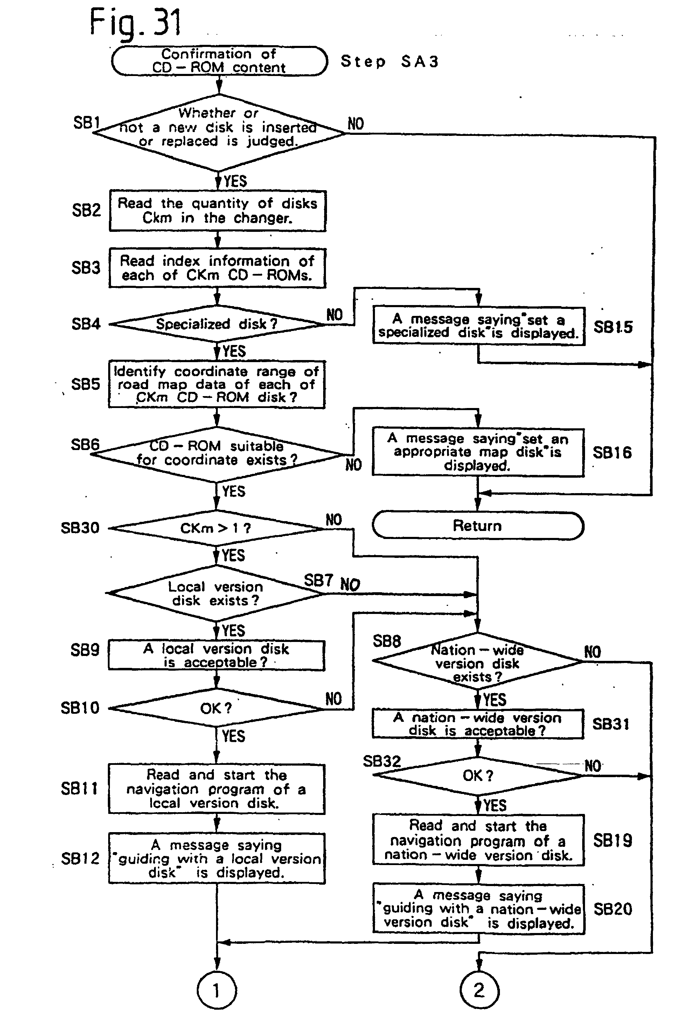

Fig.31 shows a flow chart of a second example of a program to be executed by the CPU 40 or the like of the navigation system. In this processing, the CD-ROMs of respective fields are automatically selected following a specified priority order. Meanwhile, the processing shown in Fig.31 indicates the content of the "CD-ROM processing" subroutine (step SA3) in the main flow shown in Fig.29. The same reference numerals are attached to the same processing as in the first example.

First, as described above, whether or not-the power is turned on or whether or not a new CD-ROM 37 is stored in the changer 5 is judged (step SB1). The quantity (Ckm) of the CD-ROMs stored in the changer 5 is judged by the local CPU disposed in the data transmitting/receiving section 39 (step SB2). Next, information concerning the field (field, purpose or genre) or the type of each CD-ROM is extracted and stored in the first RAM 43 as the index information IL (Ckm) (step SB3). Whether or not any navigation CD-ROM 37 is stored in the changer 5 is judged on a basis of the aforementioned index information IL (Ckm) (step SB4).

Next, the coordinate range 80m indicating the geographical range of the road map data memorized in the CD-ROM 37 is read from each of the navigation CD-ROMs 37 in the changer 5 (step SB5). Whether or not a CD-ROM 37 in which road map data including the current position coordinate of the vehicle is stored exists in the changer 5 is judged (step SB6). If no CD-ROM 37 containing the current position coordinate of the vehicle exists in the changer 5 (NO in step SB6), an alarm message saying "set a map disk of appropriate area" is displayed on the screen of the display 12 (step SB16).

In step SB6, if it is judged that the CD-ROM 37 in which road map data including the current position coordinate is stored exists in the changer 5, subsequently, whether or not the quantity of the CD-ROMs stored in the changer 5 is two or more is judged (step SB30). Here if two or more CD-ROMs are stored therein, whether or not any local version CD-ROM 37 exists in the plurality of the stored CD-ROMs is judged (step SB7). Meanwhile, this judgment is conducted using the coordinate range ZP (Ckm).

In this step SB7, if it is judged that any local version CD-ROM is stored in the changer 5, a confirmation message saying "navigation with local version is acceptable?" and characters "YES" and "NO" are displayed on the screen of the display 12 (step SB9) and a user is urged to judge YES or NO (step SB10).

If a willing of "approval" is input by a user through the touch switch 11 or a silent approval by the user occurs while the touch switch 11 is kept inoperative for a specified interval of time (YES in step SB10), a CD-ROM 37 in which a local version road map data is stored is selected from the trays of the changer 5. Then, the navigation program is copied from that CD-ROM 37 to the program area PL of the first RAM 43 (step SB11). After that, a message saying "guiding by local version disk" is displayed on the screen of the display 12 (step SB12).

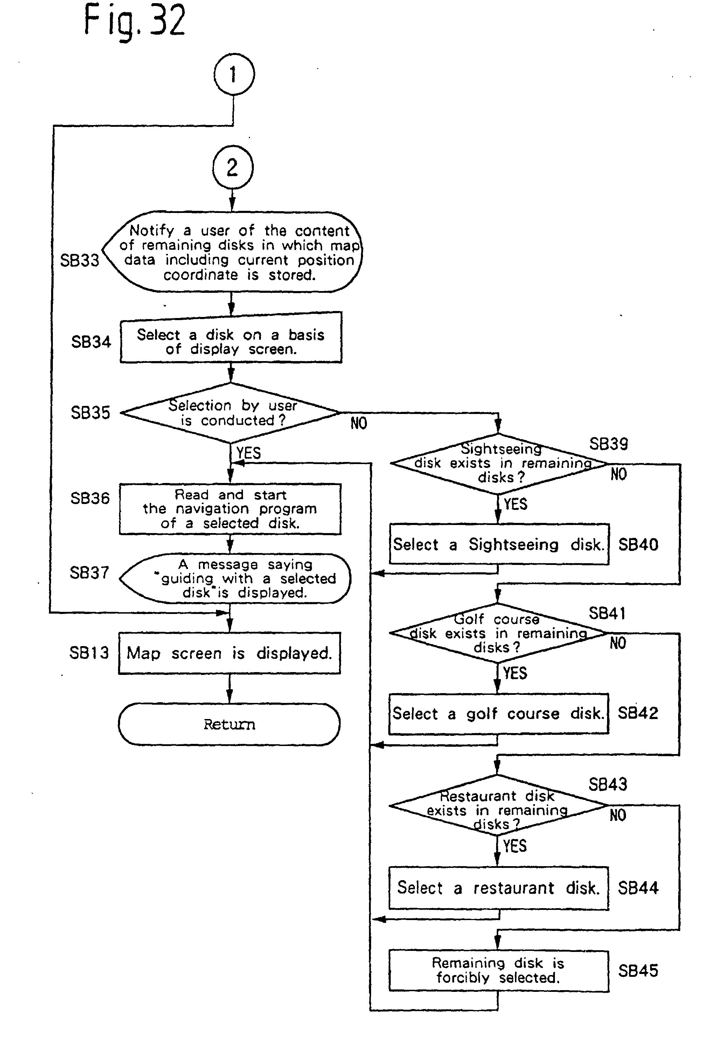

If the navigation program of the local version CD-ROM 37 is copied to the program area PL of the first RAM 43, the road map or the residential map is displayed on the screen of the display 12 on a basis of the current position data MP of the first RAM 43 such that -the current position of the vehicle is located in the center of the screen of the display 12 (step SB13 in Fig. 32). Then, the "CD-ROM processing" subroutine is terminated and the processing is returned to the main flow shown in Fig.29.

On the other hand, even if the quantity Ckm of the CD-ROMs in the changer 5 is 1 (NO in step SB6) or if, although a plurality of the CD-ROMs 37 are stored in the changer 5, no local version CD-ROM is stored in that plurality of the CD-ROMs 37 (NO in step SB7) or if NO is answered in step 10, namely a willing of "disapproval" is input by the user, whether or not the remaining CD-ROM 37 in the changer 5 is a nation-wide version CD-ROM is judged (step SB8).

If a nation-wide version CD-ROM 37 exists in the changer 5 (YES in step SB8), to ask the user whether or not the navigation operation may be executed using this nation-wide version CD-ROM 37, a message saying "nation-wide version disk is acceptable?" is displayed on the screen of the display 12 (step SB31).

In response to this indication, if the user inputs a willing of "approval" through the touch switch 11 or a silent approval by the user occurs while the touch switch 11 is kept inoperative for a specified interval of time (YES in step SB32), this nation-wide version CD-ROM 37 is selected in the changer 5. Then, the navigation program stored in this nation-wide version CD-ROM 37 is read by the data transmitting/receiving section 39 and copied to the program area PL of the first RAM 43 (step SB19). Then, a message saying "guiding with nation-wide version" is displayed on the screen of the display 12 (step SB20).

If the navigation program of the nation-wide version CR-ROM 37 is copied to the program area PL of the first RAM 43, the road map or the residential map is displayed on the screen of the display 12 on a basis of the current position data MP of the first RAM 43 such that the current position of the vehicle is located in the center of the screen of the display 12 (step SB13 in Fig. 32. Then, the "CD-ROM processing" subroutine is terminated and the processing is returned to the main flow shown in Fig.29.

However, If NO is answered in step SB8 or step SB32, index information IL of each of the remaining CD-ROMs 37 in the changer 5, in which road map data including the current position coordinate is displayed on the display 12 (step SB33 in Fig. 32. This is the case in which one or more CD-ROMs 37 are stored in the changer 5 and further the user does not want navigation processing by the local version CD-ROM 37 or the nation-wide version CD-ROM 37.

This displayed index information IL is information of each field of the navigation CD-ROM 37 remaining in the changer 5. For example, if two pieces of the CD-ROMs 37 whose main purpose is "golf course" and "sightseeing" each remain, a message saying "golf CD-ROM 37 remains" or "sightseeing CD-ROM remains" or the like is displayed on the screen of the display 12 and output audibly.

Here, the user operates the touch switch 11 and then a command for selecting a desired CD-ROM 37 is input (step SB34). Whether or not selection by the user occurs is judged depending on presence or absence of the operation of the touch switch 11 (step SB35). If the touch switch 11 is operated and a command for selection is input (YES in step SB35), a CD-ROM 37 corresponding to a selected field is selected in the changer 5. After that, the navigation program is copied from that selected CD-ROM 37 to the program area PL of the first RAM 43 (step SB36) and a message saying "guiding by a selected application disk" is displayed on the screen of the display 12 (step SB37).

If the navigation program is copied to the program area PL of the first RAM 43, on a basis of the current position data MP of the first RAM 43, road map or residential map is displayed on the screen of the display 12 such that the current position of the vehicle is in the center of the display 12 (SB13 in Fig 32. Then, this "CD-ROM processing" subroutine is terminated and then the processing is returned to the main flow in Fig.29.

However, if NO is answered in step SB35 or selection by the user is not executed, an arbitrary CD-ROM 37 is selected from the remaining CD-ROMs 37 in the changer 5 . Namely, whether or not a sightseeing CD-ROM 37 whose main purpose is sightseeing spot such as shrine, temple and the like exists in the remaining CD-ROMs stored in the changer 5 is judged (step SB39). If a sightseeing CD-ROM 37 exists, that sightseeing CD-ROM 37 is forcibly selected (step SB40).

However, if any sightseeing CD-ROM 37 does not remain (NO in step SB39), whether or not any golf CD-ROM 37 whose main purpose is golf course exists in the remaining CD-ROMs is judged (step SB41). If a golf CD-ROM 37 exists, that golf CD-ROM 37 is forcibly selected (step SB42).

Further, if no golf CD-ROM 37 exists (NO in step SB41), whether or not a restaurant CD-ROM 37 whose main purpose is a dietary facility such as restaurant and the like exists in the remaining CD-ROMs (step SB43). If this restaurant CD-ROM 37 exists, that restaurant CD-ROM 37 is forcibly selected (step SB44). However, if the field of a CD-ROM 37 remaining in the changer 5 is not restaurant (NO in step SB43), that remaining CD-ROM 37 is forcibly selected (step SB45).

As described above, as to the CD-ROMs 37 remaining in the changer 5, depending on the field (field, purpose, or genre), presence or absence of a corresponding CD-ROM 37 is judged in order of restaurant field, golf field, and restaurant field, and if a CD-ROM of each field exists, that CD-ROM 37 is forcibly selected. However, if the aforementioned three kinds of the CD-ROMs do not exist in the changer 38 and a CD-ROM of other field remains therein, that remaining CD-ROM 37 is forcibly selected. In the meantime, the preference order of the steps SB39-SB44 is not restricted to the above description, but the order of the first, second and third candidates is not restricted to sightseeing, golf and restaurant and further it is permissible to add other field CD-ROM 37.

If an arbitrary CD-ROM 37 is selected in steps SB39-SB45, the navigation program is copied from that selected CD-ROM 37 to the program area PL of the first RAM 43 (step SB36). Then, a message saying "guiding with selected disk" is displayed on the screen of the display 12 (step SB37). Further, on a basis of the current position data MP of the first RAM 43, road map or residential map is displayed on the screen of the display 12 such that the current position of the vehicle is in the center of the screen of the display 12 (step SB13). This "CD-ROM processing" subroutine is terminated and the processing is returned to the main flow in Fig.29.

As described above, according to this example whether or not the navigation CD-ROM 37 is stored in the changer capable of storing a plurality of the CD-ROMs 37 is automatically judged and if the navigation CD-ROM 37 is stored, particular CD-ROMs 37 of respective fields are automatically selected according to the preference order. Thus, the necessity of selecting the CD-ROM 37 manually by the user and confirming the content of the selected CD-ROM is eliminated thereby enabling startup of more comfortable navigation operation.

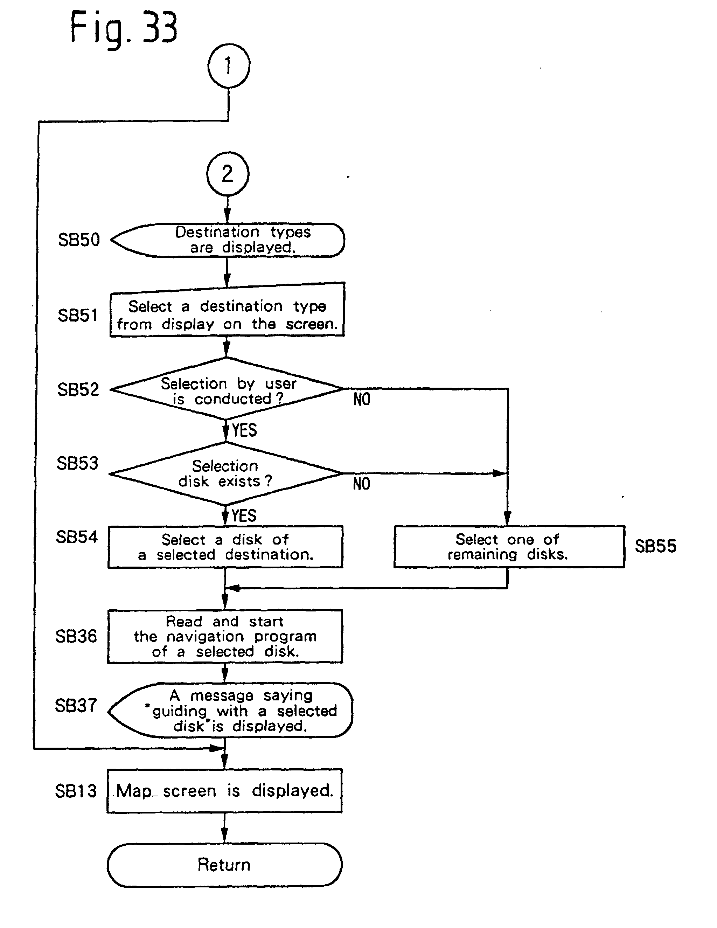

Fig.33 shows a flow chart of a third example of a program to be executed by the CPU 40 or the like of the navigation system. In this processing, a CD-ROM 37 depending on the field (field, purpose or genre) of a set destination is automatically selected. The former half of the third example is the same as Fig.31 of the aforementioned second example. The processing based on the third example, constructed by flow charts shown in Figs. 31 and 33 indicate the content of the "CD-ROM processing" subroutine (step SA3) in the main flow shown in Fig.29. In the meantime, because the part shown in Fig.31 of the third example is the same as the aforementioned second example, a description thereof is omitted. Additionally, in Fig.33, the same reference numerals are attached to the same processing as in the first and second examples.

If NO is answered in step SB8 or step SB32 in Fig.31, an approximate content and type of the destination is displayed on the screen of the display 12 (step SB50). For example, a message saying "Is your destination a golf course?" or "Is your destination a sightseeing spot?" is displayed. That is, the user is urged to input the approximate content of a destination (step SB51). If NO in the above step, this case means that ho nation-wide version CD-ROM 37 exists in the CD-ROMs remaining in the changer 5 or even if a nation-wide version CD-ROM 37 exists, the user does not permit use of the nation-wide version CD-ROM while he does not permit use of the local version CD-ROM 37 either.

Depending on the screen of the display 12, the user operates the touch switch 11 and whether or not the type of a destination is selected is judged from the outline of the displayed destination (step SB52). If YES is answered in this step SB52 or selection by the user occurs, whether or not a CD-ROM fitting to the selected type of the destination exists in the changer 5 is judged (step SB53).

If an appropriate CD-ROM 37 exists in the changer 5 (YES in step SB53), the appropriate CD-ROM 37 is moved to a position in which the data transmitting/receiving section 39 can read it in the changer 5 (step SB54). That is, selection of the CD-ROM 37 is executed. Then, the navigation program is copied from the selected CD-ROM 37 to the program area PL of the first RAM 43 (step SB36) and a message saying "guiding with a selected application disk" is displayed on the screen of the display 12 (step SB37).

If the navigation program is copied in the program area PL of the first RAM 43, on a basis of the current position data MP of the first RAM 43, road map or residential map is displayed on the screen of the display 12 such that the current position of the vehicle is in the center of the display 12 (step SB13). Then, this "CD-ROM processing" subroutine is terminated and the processing is returned to the main flow in Fig.29.

If NO is answered in step SB52 and step SB53 or if setting of an approximate destination by the user is not executed or if, even if setting of an approximate destination is executed by the user, the CD-ROM 37 which falls in the approximate destination does not exist in the changer 5, a single CD-ROM is forcibly selected from the CD-ROMs 37 remaining in the changer 5 (step SB55).

Although this selected CD-ROM 37 is, of course, a navigation CD-ROM37, the kind is not especially identified. Thus, a CD-ROM 37 existing on the topmost tray of the remaining CD-ROMs 37 is sometimes selected. The CD-ROM 37 to be selected forcibly may be a local version or nation-wide version CD-ROM 37.

After this forcible selection from the remaining CD-ROMs is carried out, the navigation program is copied from that CD-ROM 37 to the program area PL of the first RAM 43 (step SB36) and further, a message saying "guiding with a selected disk" is displayed on the screen of the display 12 (step SB37). Then, on a basis of the current position data MP of the first RAM 43, road map or residential map is displayed on the screen of the display 12 such that the current position of the vehicle is in the center of the display 12 (step SB13). After that, this "CD-ROM processing" subroutine is terminated and then the processing is returned to the main flow in Fig.29.

Meanwhile, the setting and judgment of the field of a destination in step SB50-SB52 may be decided on a basis of the genre (field, purpose or genre) of the destination selected and set in the aforementioned step SA4. The genre covers public facility genre including a nation-wide version, a local version, governmental office, hospital, park, police station, and post office, traffic facility genre including railways station, crossing, airport, harbor, express road interchange, parking area, and service area, cultural facility genre including shrine, temple, historically famous spot, remain, and castle, amusement facility genre including zoo, botanical garden, amusement park, aquarium, karaoke house, and game center, sport/leisure facility genre including fishing park, diving spot, camping field, golf course, and skiing area, lodging facility genre including hot spring and hotel, dietary facility genre including cafe, hamburger shop and restaurant, automobile facility genre including gas station, and automobile sale/repair shop, and shopping facility genre including bank, cash corner, drug store, department store, book shop, music shop and clothes shop.

This genre is determined by selecting a destination from such a genre when the destination is determined in step SA4. This kind of the genre determination method is described in detail in the specifications and drawings of Japanese Patent Publication No. H08-184455 and Japanese Patent Publication No. H09-016077. Then, a CD-ROM 37 corresponding to a genre determined in this manner is selected in the aforementioned step SB54. Additionally, whether or not the field, purpose or genre of the destination has been set in the aforementioned step SB50 is also judged. Further, this destination may be the aforementioned stop place or guidance final point data ED or the like. Still further, the current position judged in the aforementioned step SB6 may be guidance start point data SP.

As described above, according to the present invention, whether or not the navigation CD-ROM 37 is stored in the changer capable of storing a plurality of the CD-ROMs 37 is automatically judged and if the navigation CD-ROM 37 is stored, a CD-ROM 37 corresponding to the field of a set destination is automatically. Thus, the procedure of selecting the CD-ROM 37 manually by the user and confirming of the content of the selected CD-ROM 37 is eliminated so that it is possible to start more comfortable navigation operation.

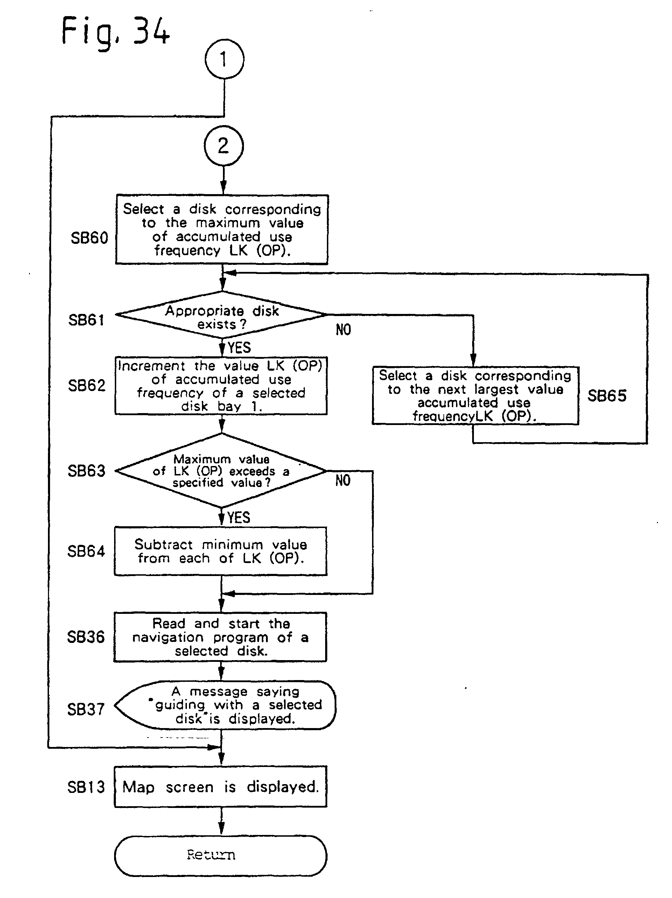

Fig.34 shows a flow chart according to a fourth example of a program to be executed by the CPU 40 or the like of the navigation system of the present invention. In this processing, depending on the use frequency of each of the CD-ROMs 37, a CD-ROM 37 is automatically selected. In the meantime, the former half of this fourth example is the same as Fig. 31 of the above described second example. The processing of the fourth example constructed by the flow charts shown in Figs. 31 and 34 indicate the content of the "CD-ROM processing" subroutine in the main flow shown in Fig.29. Because the part shown in Fig.31 of the fourth example is the same as the aforementioned second example, a description thereof is omitted. Additionally, in this Fig.34, the same reference numerals are attached to the same processing as in the above-described first to third examples.

If NO is answered in step SB8 or step SB32 in Fig.31, a CD-ROM 37 of an application variable (OP) having the maximum value accumulated use frequency LK (OP) is selected (step SB60). If NO is answered, it means that no nation-wide version CD-ROM 37 exists in the CD-ROMs 37 remaining in the changer 5 or even if a nation-wide version CD-ROM 37 exists, the user does not permit use of that nation-wide version CD-ROM 37 and at the same time, does not permit use of a local version CD-ROM 37. In this case, a CD-ROM 37 corresponding to an application variable (OP) having the maximum value accumulated use frequency LK of accumulated use frequencies LK (OP) memorized in the second RAM 41 is selected in the changer 5 (step SB60). Selection of the CD-ROM 37 corresponding to this application variable (OP) is carried out using index information IL (Ckm).

That is, a CD-ROM 37 for a destination which was used most frequently is automatically selected. Further, whether or not the CD-ROM 37 corresponding to the destination which was used most frequently exists in the changer 5 is judged (step SB61). If the CD-ROM 37 having the highest use frequency does not exist in the changer 5 (NO in step SB61), a CD-ROM 37 having the second highest use frequency is selected (step SB65). Then, whether or not the CD-ROM 37 having the second highest use frequency exists in the changer 5 is judged again (step SB61). Like this, the CD-ROM 37 which exists in the changer 5 and has the highest use frequency is selected with preference.

Then, the accumulated use frequency LK (OP) of the application variable OP corresponding to the type of the destination of the selected CD-ROM 37 is incremented by 1 (step SB62). Whether this accumulated use frequency LK(OP) incremented by 1 has reached the maximum value which can be memorized in the second RAM 41 is judged (step SB63). If the maximum value is reached, the smallest value accumulated use frequency LK of the accumulated use frequency LK(OP) is subtracted from each of the accumulated use frequencies LK (OP) (step SB64). Consequently, this prevents overflow of the accumulated use frequency LK (OP). In this case, it is permissible to subtract an arbitrary value such as "2", "3" "4", .... from each of the accumulated use frequencies KL (OP).

After that, the navigation program is copied from the selected CD-ROM 37 to the program area PL of the first RAM 43 (step SB36). Further, a message saying "guiding with a selected application disk" is displayed on the screen of the display 12 (step SB37). Then, on a basis of the current position data MP of the first RAM 43, road map or residential map is displayed on the screen of the display 12 such that the current position of the vehicle is in the center of the display 12 (step SB13). This "CD-ROM processing" subroutine is terminated and the processing is returned to the main flow in Fig.29.

In the meantime, if all the accumulated use frequencies LK (OP) are "0", it is permissible to construct so as to forcibly select the CD-ROM 37 located on the topmost position of the navigation CD-ROMs 37 in the changer 5 in the aforementioned step SB60, except the local version or the nation-wide version CD-ROM 37.

It is permissible to substitute the processing in step SB39-SB45 in the aforementioned second example for the processing shown in Fig.34 in the fourth example. As a result, after any local version or nation-wide version CD-ROM 37 is not selected in the second example, if the user does not select a CD-ROM 37 corresponding to the approximate content of the remaining CD-ROM displayed on the display 12, the accumulated use frequency LK (OP) used in the fourth example is utilized and the CD-ROM 37 having the highest use frequency is automatically selected.

Although either of the local version CD-ROM or the nation-wide version CD-ROM 37 is selected in the first example, automatic selection of the CD-ROM 37 using the accumulated use frequency LK (OP) in the fourth example instead of this local version and nation-wide version may be conducted. As a result, the use frequencies of the local version CD-ROMs, the nation-wide version CD-ROMs, CD-ROMs of respective fields and all types CD-ROMs are taken into account, so that an appropriate CD-ROM 37 is automatically selected.

As described above, according to the present invention, whether or not the navigation CD-ROM 37 is stored in the changer capable of storing a plurality of the CD-ROMs 37 is automatically judged and if the navigation CD-ROM 37 is stored, an appropriate CD-ROM 37 is automatically selected from the plurality of the CD-ROMs 37 on a basis of the previous use frequencies of the CD-ROMs. Thus, the procedure of selecting the CD-ROM 37 manually by the user and confirming of the content of the selected CD-ROM 37 is eliminated so that it is possible to start more comfortable navigation operation.

For example, the destination to be processed in step SB50 and SB51 may be the aforementioned stop place or the guidance final point data ED or the like. Further, the current position judged in the aforementioned step SB6 may be the guidance start point data SP.

Further, according to the construction in each of the above described examples, the navigation program is read from the CD-ROM 37, written into the first RAM 43 and executed by the CPU 40. Like conventionally, it is permissible that this data is memorized preliminarily in the first ROM 49 so that in any CD-ROM 37, the navigation processing such as route search is executed with the same program.

However, by providing a construction wherein an updated program is loaded to the first RAM 43 as mentioned in each of the above described examples, even if the road map data construction method for the CD-ROM 37 is changed in future so that that updated data cannot be used effectively with the previous program, that updated data can be used effectively by rewriting the CD-ROM program. Thus, the navigation system functions as an extensive type.

Further, if all the screen indication data such as symbols for various information transmission, displayed on the screen of the display 12 are memorized in the CD-ROM 37 and when a program is read in each of the examples, the screen indication data is copied to the RAM altogether, it is always possible to execute the updated screen display method.

Additionally, the coordinate range ZP (Ckm) to be written into the first RAM 43 is copied from the coordinate range 80m preliminarily memorized in the CD-ROM 37 according to each of the above described examples. However,the coordinate range ZP (Ckm) may be extracted by arithmetic operation based on the road map data in the CD-ROM 37.

Although the ROM is classified to the first ROM 49 and the second ROM 42 for convenience for description, it is permissible to use a single ROM. Further, the type of the first RAM 43 is not restricted and may be a dynamic RAM, a static RAM or a readable/writable RAM such as a memory card. In addition, in the current position detection unit 2, one or two of the GPS receiver unit 21, the beacon receiver unit 22 and the data receiver unit 23 may be omitted. The printer 13 may be also omitted.

## Claims

1. A navigation system for conducting route search and route guidance up to a destination, said navigation system comprising:
a current position detection means (2) for detecting a current position of a vehicle;
an information storage means (3, 37a-37e) for storing map information for conducting route search and route guidance and other route information;
an input means (11) for inputting a destination and inputting an instruction for executing route search from a current position detected by said current position detection means (2) to said destination;
an output means (12, 16) for outputting information for route guidance;
a central processing means (4) for conducting route search based on said map information;
wherein
said central processing means (4) is for temporarily memorizing a route determined by the route search from said current position to said destination and for outputting a signal for conducting route guidance according to the memorized route to the output means (12, 16), and **characterized in that** said central processing means (4) is for judging whether or not said information storage means (3, 37a-37e) is replaced and whether or not a route guidance to the destination has been terminated, wherein if said information storage unit is replaced and the route guidance to the destination has not been terminated said central processing means (4) conducts route search from the current position to the destination.

2. A navigation system according to claim 1 wherein said information storage means (3, 37a-37e) stores programs for conducting said route search and route guidance and said central processing means (4) includes an internal storage means (41) for storing said programs if said programs are different when said information storage means is replaced.

3. A navigation system according to claim 1 or 2 wherein said central processing means (4) memorizes a search condition and-a guidance route and said central processing means (4) conducts route search from the current position to the destination based on said memorized search condition if said information storage means is replaced and the route guidance up to a destination has not been terminated.

## Patentansprüche

1. Navigationssystem zum Ausführen einer Routensuche und einer Routenführung bis zu einem Ziel, wobei das Navigationssystem aufweist:
eine Ist-Positionserfassungseinrichtung (2) zum Erfassen einer Ist-Position eines Fahrzeugs;
eine Informationsspeichereinrichtung (3, 37a-37e) zum Speichern von Karteninformation zum Ausführen einer Routensuche und einer Routenführung und zum Speichern anderer Routeninformation;
eine Eingabeeinrichtung (11) zum Eingeben eines Ziels und zum Eingeben eines Befehls zum Ausführen einer Routensuche von einer durch die Ist-Positionserfassungseinrichtung (2) erfaßten Ist-Position zum Ziel;
einer Ausgabeeinrichtung (12, 16) zum Ausgeben von Routenführungsinformation; und
einer Zentraleinheit (4) zum Ausführen einer Routensuche basierend auf der Karteninformation;
wobei die Zentraleinheit (4) zum Zwischenspeichern einer durch die Routensuche bestimmten Route von der Ist-Position zum Ziel und zum Ausgeben eines Signals zum Ausführen einer Routenführung gemäß der gespeicherten Route an die Ausgabeeinrichtung (12, 16) dient;
**dadurch gekennzeichnet, daß**
die Zentraleinheit (4) dazu geeignet ist, zu entscheiden, ob die Informationsspeichereinrichtung (3, 37a-37e) ausgewechselt wurde oder nicht, und ob eine Routenführung zum Ziel beendet worden ist oder nicht, wobei, wenn die Informationsspeichereinrichtung ausgewechselt wurde und die Routenführung zum Ziel nicht beendet worden ist, die Zentraleinheit (4) eine Routensuche von der Ist-Position zum Ziel ausführt.

2. Navigationssystem nach Anspruch 1, wobei die Informationsspeichereinrichtung (3, 37a-37e) Programme zum Ausführen der Routensuche und der Routenführung speichert und die Zentraleinheit (4) einen internen Speicher (41) aufweist, der die Programme speichert, wenn die Programme sich unterscheiden, wenn die Informationsspeichereinrichtung ausgewechselt wird.

3. Navigationssystem nach Anspruch 1 oder 2, wobei die Zentraleinheit (4) eine Suchbedingung und eine Führungsroute speichert, und wobei die Zentraleinheit (4) eine Routensuche von der Ist-Position zum Ziel basierend auf der gespeicherten Suchbedingung ausführt, wenn die Informationsspeichereinrichtung ausgewechselt wird und die Routenführung bis zum Ziel nicht beendet worden ist.

## Revendications

1. Système de navigation pour diriger une recherche d'itinéraire et un guidage d'itinéraire jusqu'à une destination, ledit système de navigation comprenant :
un moyen de détection (2) de position actuelle pour détecter une position actuelle d'un véhicule ;
un moyen de stockage (3, 37a-37e) d'information pour stocker des informations de carte pour diriger une recherche d'itinéraire et un guidage d'itinéraire et des informations d'autre itinéraire ;
un moyen d'entrée (11) pour entrer une destination et entrer une instruction pour exécuter une recherche d'itinéraire d'une position actuelle détectée par ledit moyen de détection (2) de position actuelle jusqu'à ladite destination ;
un moyen de sortie (12, 16) pour délivrer des informations pour le guidage d'itinéraire ;
un moyen central de traitement (4) pour diriger une recherche d'itinéraire basée sur lesdites informations de carte ;
dans lequel ledit moyen central de traitement (4) sert à mémoriser temporairement un itinéraire déterminé par la recherche d'itinéraire de ladite position actuelle à ladite destination et à délivrer un signal au moyen de sortie (12, 16) pour diriger un guidage d'itinéraire selon l'itinéraire mémorisé, et **caractérisé en ce que** ledit moyen central de traitement (4) sert à juger si ledit moyen de stockage (3, 37a-37e) d'information est ou non remplacé et si un guidage d'itinéraire jusqu'à la destination a ou non été déterminé, dans lequel si ledit module de stockage d'information est remplacé et le guidage d'itinéraire jusqu'à la destination n'a pas été déterminé, ledit moyen central de traitement (4) dirige une recherche d'itinéraire de la position actuelle à la destination.

2. Système de navigation selon la revendication 1, dans lequel ledit moyen de stockage (3, 37a-37e) d'information mémorise des programmes pour diriger ladite recherche d'itinéraire et ledit guidage d'itinéraire et ledit moyen central de traitement (4) comprend un moyen de stockage interne (41) pour mémoriser lesdits programmes si lesdits programmes sont différents quand ledit moyen de stockage d'information est remplacé.

3. Système de navigation selon la revendication 1 ou 2, dans lequel ledit moyen central de traitement (4) mémorise une condition de recherche et un itinéraire de guidage et ledit moyen central de traitement (4) dirige une recherche d'itinéraire de la position actuelle à la destination en fonction de ladite condition de recherche mémorisée si ledit moyen de stockage d'information est remplacé et le guidage d'itinéraire jusqu'à une destination n'a pas été déterminé.
